(19) Europäisches Patentamt
European Patent Office
Office européen des brevets

(11) **EP 2 225 092 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(21) Anmeldenummer: **08850878.3**

(22) Anmeldetag: **17.11.2008**

(51) Int Cl.:
*B29C 70/38* *(2006.01)*    *B29C 70/32* *(2006.01)*
*B29C 53/58* *(2006.01)*    *B29C 53/66* *(2006.01)*
*B29C 53/68* *(2006.01)*

(86) Internationale Anmeldenummer:
**PCT/EP2008/009713**

(87) Internationale Veröffentlichungsnummer:
**WO 2009/062749 (22.05.2009 Gazette 2009/21)**

(54) **VORRICHTUNG UND VERFAHREN ZUR HERSTELLUNG EINES FASERVERBUNDWERKSTOFF-BAUTEILS**

METHOD AND DEVICE FOR PRODUCING A FIBER COMPOSITE COMPONENT

DISPOSITIF ET PROCÉDÉ DE FABRICATION D'UNE PIÈCE EN MATIÈRE COMPOSITE FIBREUSE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.11.2007 US 988267 P**
**15.11.2007 DE 102007054645**

(43) Veröffentlichungstag der Anmeldung:
**08.09.2010 Patentblatt 2010/36**

(73) Patentinhaber: **Airbus Operations GmbH**
**21129 Hamburg (DE)**

(72) Erfinder: **RETTIG, Bernd**
**22765 Hamburg (DE)**

(74) Vertreter: **Schatt, Markus F.**
**Schatt IP**
**Patent- und Rechtsanwaltskanzlei**
**Rindermarkt 7**
**80331 München (DE)**

(56) Entgegenhaltungen:
WO-A-91/04843          WO-A-2005/018917
DE-A1- 3 843 488       US-A- 3 397 847
US-A1- 2006 175 454

**Beschreibung**

Die Erfindung betrifft eine Vorrichtung zur Herstellung eines Faserverbundwerkstoff (FVW)-Bauteils, und ein Verfahren zur Herstellung eines Faserverbundwerkstoffbauteils.

Die Dokumente DE 38 43 488 A1, US 3 397 847 A und WO 91/04843 beschreiben eine Vorrichtung zur Herstellung eines FVW-Bauteils mit zumindest einer Abgabe-Vorrichtung zum Auflegen eines bandförmigen Prepreg-Materials auf eine Oberfläche zur Herstellung des FVW-Bauteils.

Die DE 41 22 785 A1 beschreibt eine Wickelanlage zur Herstellung von Bauelementen aus faserverstärkten Kunststoffen mit einem Wickelkopf zur Ablage von Längsverstärkungen mit kleinen Fasserwickeln bezogen auf die Wickelachse. Die Wickelanlage weist einen auf einer zusätzlichen Schlittenführung der Wickelanlage parallel zu einem Wickelkopf verfahrbaren Schlitten sowie eine auf einem Rotor angeordnete Fadenführung mit einer Abspuleinheit mit einem Spulenträger auf.

Die WO 2005/018917 A2 beschreibt eine Vorrichtung zum Auftragen von Laminierfäden oder Laminierbändern auf eine drehbar gelagerte Trommel zur Herstellung eines Verbundbauteils. Das Auftragen der Laminierfäden erfolgt mittels Abgabevorrichtungen, die auf einem Ring verfahrbar und an einer Lagerachse drehbar gelagert sind.

Aus der WO 2006/060270 A1 ist eine Abgabevorrichtung zur Abgabe und zum Auftragen von Laminierbändem auf eine Auftragsoberfläche bekannt.

Zur Steigerung der Produktivität, Flexibilität und Wirtschaftlichkeit moderner Verfahren zur Herstellung von Faserverbundwerkstoffbauteilen hat im Wesentlichen die Automatisierungstechnik beigetragen, dadurch gekennzeichnet, dass automatisch arbeitende Faserlegevorrichtungen, sogenannte Automated Fiber Placement-Systeme (AFP-Systeme), neben den manuellen Verfahren immer mehr an Bedeutung gewinnen.

Insbesondere durch den Einsatz derartiger automatischer Faserlegevorrichtungen mit einem oder mehreren verfahrbaren Auftragsköpfen, mittels derer ein vorimprägniertes Faserverbundwerkstoffband, beispielsweise ein unidirektionales CFK-Prepreg-Band (UD-CFK-Prepreg-Band), auf eine Arbeitsoberfläche einer Werkzeugform oder eines Bauteils aufgebracht wird, ergeben sich im Bereich der Fertigung kürzere Durchlaufzeiten mit einer höheren Auslastung des Fertigungspotentials und daraus resultierend verringerte Herstellungskosten der Verbundwerkstoffprodukte. Die durch manuelle Arbeiten bedingten Nebenzeiten können bei hoher Fertigungsqualität auf ein Minimum reduziert werden.

Eine derartige Vorrichtung zur Herstellung von Faserverbundwerkstoffbauteilen ist beispielsweise aus der WO 2005/105641 A2 bekannt. Diese herkömmliche Faserlegevorrichtung verwendet eine Vielzahl von unabhängig voneinander verschwenkbaren Auftragsköpfen mittels derer Verbundwerkstoffbänder auf eine Arbeitsoberfläche einer Werkzeugform aufbringbar sind. Hierzu sind die Auftragsköpfe jeweils auf einem Trägersystem angeordnet, das auf Führungsschienen parallel zu einer Längsachse der zu beschichtenden Werkzeugform verfahrbar ist. Eine rotationssymmetrische Werkzeugform kann entlang ihrer Längsachse drehbar zwischen den Auftragsköpfen gelagert sein, so dass ihre Umfangsfläche bei einer Umdrehung der Werkzeugform und Axialverschiebung der Auftragsköpfe entlang der Führungsschienen mit dem Verbundwerkstoffband beschichtet wird. Nachteilig bei derartigen Faserlegevorrichtungen ist, dass diese vorrichtungstechnisch aufwendig und aufgrund der parallel zu der Längsachse der Werkzeugform angeordneten Führungsschienen nicht zur Beschichtung von Werkzeugformen mit einer gekrümmten Längsachse geeignet sind.

Demgegenüber liegt der Erfindung die Aufgabe zugrunde, eine Vorrichtung und ein Verfahren zur Herstellung von Faserverbundwerkstoffbauteilen, die insbesondere auch in ihrer Längsrichtung gekrümmt gestaltet sind, sowie ein nach einem derartigen Verfahren hergestelltes Faserverbundwerkstoff-Bauteil zu schaffen, bei denen gegenüber herkömmlichen Lösungen eine weitgehend automatisierbare Fertigung bei verringertem vorrichtungstechnischen Aufwand ermöglicht ist.

Diese Aufgaben werden durch die Merkmale der unabhängigen Ansprüche gelöst. Weitere Ausführungsformen sind in den auf die unabhängigen Ansprüche rückbezogenen Unteransprüchen angegeben.

Erfindungsgemäß ist insbesondere eine Vorrichtung zur Herstellung eines FVW-Bauteils mit zumindest einer Abgabe-Vorrichtung zum Auflegen mindestens eines Materials und insbesondere mindestens eines bandförmigen Materials auf eine Oberfläche einer Werkzeugform oder eines Halbzeugs zur Herstellung des FVW-Bauteils vorgesehen. Die Vorrichtung weist zumindest einen Laufwagen, auf dem die Abgabe-Vorrichtung angeordnet ist, und eine die Oberfläche zumindest teilweise in deren Umfangsrichtung umlaufende Führungsbahn auf, auf welcher der Laufwagen zum Verfahren der Abgabe-Vorrichtung relativ zu der Oberfläche bewegbar ist. Dabei kann die Abgabe-Vorrichtung um eine zu der Führungsbahn winklig verlaufende Schwenkachse schwenkbar oder drehbar sein. Die Vorrichtung kann insbesondere derart gestaltet sein, dass die Werkzeugform oder das Halbzeug und die Bewegungsbahn relativ zueinander bewegbar sind.

Für einen speziellen vorteilhaften Anwendungsfall, bei dem das Halbzeug mehr oder weniger nur in Umfangsrichtung beschichtet wird, kann die Vorrichtung eine Führungseinrichtung zur Bewegung der Werkzeugform oder des Halbzeugs und der Bewegungsbahn relativ zueinander aufweisen.

Gemäß einem Ausführungsbeispiel der Erfindung kann eine Zustellvorrichtung und/oder die Führungseinrichtung derart gestaltet sein, dass die Werkzeugform oder das Halbzeug nicht nur entlang seiner Längsrichtung bewegt werden kann, sondern auch senkrecht dazu. Somit kann die Werkzeugform oder das Halbzeug von der Führungseinrichtung auf dreidimensional zu beschreibende Art und Weise geführt bzw. bezüglich der Führungsbahn zugestellt werden.

Ferner kann gemäß eines Ausführungsbeispiels die Zustellvorrichtung und/oder die Führungseinrichtung derart gestaltet sein, dass die Werkzeugform bzw. das Halbzeug derart geführt werden, dass es lediglich axial, d.h. entlang seiner Längsrichtung verschoben wird und/oder um eine senkrecht zur Längsrichtung stehende Achse herum gedreht wird, jedoch nicht um eine Achse gedreht wird, die in Längsrichtung verläuft. Das bedeutet unter anderem, dass bei diesem Ausführungsbeispiel während des Auftragens des Materials aus den Auftragsköpfen, insoweit die Auftragung entlang einer derartigen Richtung auf der Oberfläche der Werkzeugform bzw. das Halbzeug erfolgt, welche Richtung eine Komponente senkrecht zur Längsrichtung, d.h. in umfänglicher Richtung der Werkzeugform bzw. des Halbzeugs hat, die umfängliche Auftragung aus der Bewegung des Laufwagens auf der Führungsbahn resultiert.

Die Zustellvorrichtung und/oder die Führungseinrichtung kann derart gestaltet sein, dass, bei einer vorbestimmten Krümmung der Werkzeugform oder des Halbzeugs in Längsrichtung mit einem entlang der Längsrichtung variablen oder nicht-variablen Krümmungsradius, die Richtung des Krümmungsradius auf den momentanen Mittelpunkt des Bereichs, auf den das bandförmige Material von der Abgabe-Vorrichtung aus auf die Oberfläche der Werkzeugform oder des Halbzeugs aufgelegt wird, um maximal 30 Grad von der Radialebene abweicht, die in dem relevanten Abschnitt von der Bewegungsbahn oder von der Vertikalen auf die Tangentialebene der Führungsbahn an der momentanen Stelle des Wagens aufgespannt wird. Die Führungseinrichtung zur Bewegung der Werkzeugform oder des Halbzeugs und der Bewegungsbahn relativ zueinander kann auch derart gestaltet sein, dass, bei einer vorbestimmten Krümmung der Werkzeugform oder des Halbzeugs in Längsrichtung mit einem entlang der Längsrichtung variablen oder nicht-variablen Krümmungsradius, die Richtung des Krümmungsradius auf den Mittelpunkt des Bereichs, auf den das bandförmige Material von der Abgabe-Vorrichtung aus auf die Oberfläche der Werkzeugform oder des Halbzeugs aufgelegt wird, um maximal 30 Grad von der Radialebene abweicht, die von der Bewegungsbahn aufgespannt wird.

Die Zustellvorrichtung und/oder die Führungseinrichtung kann insbesondere derart gestaltet sein, dass, bei einer vorbestimmten Krümmung der Werkzeugform oder des Halbzeugs in Längsrichtung mit einem entlang der Längsrichtung variablem oder nichtvariablem Krümmungsradius, die Richtung des Krümmungsradius auf den momentanen Mittelpunkt des Bereichs, auf den das bandförmige Material vom Abgabe-Vorrichtung aus auf die Oberfläche der Werkzeugform oder des Halbzeugs aufgelegt wird, um maximal 30 Grad von der Radialebene abweicht, die in dem relevanten Abschnitt von der Bewegungsbahn aufgespannt wird, oder von der Vertikalen auf die Tangentialebene der Führungsbahn an der momentanen Stelle des Wagens. Die Führungseinrichtung zur Bewegung der Werkzeugform oder des Halbzeugs und der Bewegungsbahn relativ zueinander kann auch derart gestaltet sein, dass, bei einer vorbestimmten Krümmung der Werkzeugform oder des Halbzeugs in Längsrichtung mit einem entlang der Längsrichtung variablen oder nicht-variablen Krümmungsradius, die Richtung des Krümmungsradius auf den Mittelpunkt des Bereichs, auf den das bandförmige Material vom Abgabe-Vorrichtung aus auf die Oberfläche der Werkzeugform oder des Halbzeugs aufgelegt wird, um maximal 30 Grad von der Radialebene abweicht, die von der Bewegungsbahn aufgespannt wird.

Die Führungsbahn kann eine zumindest abschnittsweise kreisförmige Kurvenbahn bilden. Die Führungsbahn kann weiterhin an einem zumindest abschnittsweise ringförmigen Trägerteil ausgebildet sein, der die Werkzeugform oder das Halbzeug zumindest teilweise umgibt oder umläuft. Dabei kann die Führungsbahn abschnittsweise quer zur Längsrichtung der Werkzeugform oder des Halbzeugs verlaufen.

Die Führungsbahn kann zumindest eine Laufschiene zur Aufnahme einer Rollenanordnung des Laufwagens aufweisen, wobei eine rolle oder mehrere Rollen motorisch angetrieben sein können. Zusätzlich oder alternativ kann die Führungsbahn zumindest einen Verzahnungsabschnitt aufweisen, der mit mindestens einem Antriebsrad des Laufwagens in Eingriff bringbar ist.

Die Herstellungsvorrichtung kann eine Steuerungsvorrichtung zur Ansteuerung der Führungseinrichtung aufweisen, durch die eine Relativbewegung zwischen der Werkzeugform oder des Halbzeugs und der Führungsbahn aufgrund manueller Vorgaben oder automatisch erfolgen kann. Die Steuerungsvorrichtung und die Führungseinrichtung können derart ausgebildet sein, dass die Führungsbahn gegenüber der Werkzeugform oder dem Halbzeug bewegt werden kann. Dabei können die Steuerungsvorrichtung und die Führungseinrichtung derart ausgebildet sein, dass die Werkzeugform oder das Halbzeug gegenüber der Führungsbahn oder umgekehrt bewegt werden kann. Dabei kann mit der Steuerungsvorrichtung und der Führungseinrichtung die Werkzeugform oder das Halbzeug gegenüber der Führungsbahn derart bewegt werden, dass der Winkel zwischen der Längserstreckung des bandförmigen Materials zwischen der Abgabe-Vorrichtung und der Stelle der Oberfläche der Werkzeugform oder des Halbzeugs auf den während des Auflegens des bandförmigen Materials dasselbe aufgelegt wird, und der Radialebene in der Radialebene gesehen, kleiner als 30 Grad beträgt.

Die Steuerungsvorrichtung und die Führungseinrichtung können derart ausgebildet sein, dass mit der Steuerungsvorrichtung und der Führungseinrichtung die Bewegung des Laufwagens entlang der Führungsbahn zum Auflegen des Materials auf die Oberfläche der Werkzeugform oder auf die Oberfläche des Halbzeugs und/ oder die Drehbewegung der Abgabe-Vorrichtung gesteuert werden kann. Auch kann die Steuerungsvorrichtung und die Führungseinrichtung derart ausgebildet sein, dass mit der Steuerungsvorrichtung und der Führungseinrichtung die Abgabe des Materials vom Auftragkopf auf die Oberfläche der Werkzeugform oder die Oberfläche des Halbzeugs gesteuert werden kann. Mit der Steuerungsvorrichtung und der Führungseinrichtung kann der Krümmungsradius der Kurvenbahn zumindest abschnittsweise dem Krümmungsradius der Werkzeugform oder des Halbzeugs entsprechen.

Dabei kann insbesondere eine im Bereich eines zu bearbeitenden Abschnitts der Werkzeugform oder des Halbzeugs an den Krümmungsradius der Werkzeugform oder des Halbzeugs angelegte Tangente einen Winkel von etwa 90° (d.h. ±15 Grad) zu einer von der Bewegungsbahn aufgespannten Radialebene aufweisen.

Die Führungseinrichtung zur Bewegung der Werkzeugform oder des Halbzeugs kann zumindest einen Roboterarm aufweisen. Dabei kann der Roboterarm außerhalb der Bewegungsbahn des Laufwagens angeordnet sein und zur Kopplung mit der Werkzeugform oder dem Halbzeug einen Endabschnitt der Werkzeugform oder des Halbzeugs halten oder zumindest abschnittsweise umgreifen.

Die Vorrichtung oder die Führungseinrichtung zur Bewegung der Werkzeugform oder des Halbzeugs kann eine Zustellbahn oder einen Träger oder ein Trägerteil und einen auf dieser bewegbaren Zustellwagen aufweisen, an dem die Werkzeugform oder das Halbzeug gehalten werden kann. Das Trägerteil kann zumindest eine Laufschiene zur Aufnahme einer Rollenanordnung des Zustellwagens aufweisen. Auch kann das Trägerteil zumindest einen Verzahnungsabschnitt aufweisen, der mit mindestens einem Antriebsrad des Zustellwagens in Eingriff bringbar ist.

Die Steuerungseinrichtung kann eine CNC-Steuerung aufweisen, die eine Funktion aufweist, mit der die Bewegungssteuerung des Laufwagens entlang der Bewegungsbahn, der Abgabe-Vorrichtung entlang der Schwenkachse und/oder der Werkzeugform bzw. des Halbzeugs und der Bewegungsbahn relativ zueinander erfolgt.

Die Bewegung des Laufwagens entlang der Führungsbahn und die Zustellbewegung der Werkzeugform bzw. des Halbzeugs und/oder der Führungsbahn können durch eine Kopplungseinrichtung miteinander gekoppelt sein.

Die Steuerungsvorrichtung kann eine Funktion zur Ansteuerung der Führungseinrichtung aufweisen, mit der das bandartige Material flächig, partiell auf die Oberfläche aufgebracht werden kann.

Auch kann die Steuerungsvorrichtung eine Funktion zur Ansteuerung der Führungseinrichtung aufweisen, mit der ein Muster gespeichert werden kann, mit dem das bandartige Material flächig oder partiell auf die Oberfläche aufgebracht werden kann.

Generell können mehrere Auftragsköpfe an einem Laufwagen oder mehrere Laufwagen, die auf der Führungsbahn bewegbar sind, die jeweils zumindest eine Abgabe-Vorrichtung aufweisen, vorgesehen sein.

Die Vorrichtung kann mehrere Führungsbahnen mit jeweils einem Laufwagen oder mehreren Laufwagen aufweisen.

Die Steuerungsvorrichtung und die Führungseinrichtung können derart gestaltet sein, dass mit diesen mehrere Auftragsköpfe zum parallelen Auflegen des bandartigen Materials angesteuert werden können.

Die Steuerungsvorrichtung kann so vorgesehen sein, dass zwei Auftragsköpfe in Umfangsrichtung der Werkzeugform oder des Halbzeugs gesehen um einen Winkel von 180 Grad ± 30 Grad zueinander versetzt bewegt werden können.

Die Führungsbahn und die Drehstellung der Abgabe-Vorrichtung kann hinsichtlich der mit dem Material zu belegenden Oberfläche der Werkzeugform oder des Halbzeugs derart einstellbar sein, dass der Verbundwerkstoff mit einem Winkel $\alpha$ von 0 Grad ± 15 Grad bezüglich der Längsachse der Werkzeugform oder des Halbzeugs auf die Werkzeugform oder das Halbzeug aufbringbar ist.

Die Steuerungsvorrichtung kann so vorgesehen sein, dass die Führungsbahn und die Drehstellung der Abgabe-Vorrichtung hinsichtlich der mit dem Material zu belegenden Oberfläche der Werkzeugform oder des Halbzeugs derart einstellbar sind, dass der Verbundwerkstoff mit einem Winkel $\alpha$ im Bereich von mehr als 0° bis etwa 90°, vorzugsweise von ±45 Grad, ±60 Grad und/oder 90 Grad, jeweils ± 5 Grad, bezüglich der Längsachse der Werkzeugform oder des Halbzeugs auf die Werkzeugform oder das Halbzeug aufbringbar ist.

Erfindungsgemäß ist weiterhin ein Verfahren zur Herstellung eines FVW-Bauteils mit zumindest einer Abgabe-Vorrichtung zum Auflegen mindestens eines bandförmigen Materials auf eine Oberfläche einer Werkzeugform oder eines Halbzeugs zur Herstellung des FVW-Bauteils vorgesehen, wobei die Abgabe-Vorrichtung auf einem Laufwagen angeordnet entlang einer die Oberfläche zumindest teilweise in deren Umfangsrichtung umlaufenden Führungsbahn gefahren wird und dabei das bandförmige Material abgibt und auf die Oberfläche auflegt. Dabei kann vorgesehen sein, dass die Abgabe-Vorrichtung manuell oder mit einer Steuerungsvorrichtung mit entsprechenden Funktionen sowie ein Führungsvorrichtung gesteuert zur Einstellung des Verbundwerkstoffwinkels entlang einer zu der Bewegungsbahn angestellten Schwenkachse verschwenkt wird. Dabei kann vorgesehen sein, dass die Werkzeugform oder das Bauteil und die Bewegungsbahn relativ zueinander verfahren werden.

Bei diesen Varianten kann weiterhin vorgesehen sein, dass die Führungsbahn und die Drehstellung der Abgabe-Vorrichtung hinsichtlich der mit dem Material zu belegenden Oberfläche der Werkzeugform oder des Halbzeugs derart eingestellt sind, dass der Verbundwerkstoff mit einem Winkel α von 0 Grad ± 15 Grad bezüglich der Längsachse der Werkzeugform oder des Halbzeugs auf die Werkzeugform oder das Halbzeug aufgelegt wird.

Alternativ hierzu kann vorgesehen sein, dass die Führungsbahn und die Drehstellung der Abgabe-Vorrichtung hinsichtlich der mit dem Material zu belegenden Oberfläche der Werkzeugform oder des Halbzeugs derart eingestellt sind, der Verbundwerkstoff mit einem Winkel α im Bereich von mehr als 0° bis etwa 90°, vorzugsweise von ±45 Grad, ±60 Grad und/oder 90 Grad, jeweils ± 5 Grad, bezüglich der Längsachse der Werkzeugform oder des Halbzeugs auf die Werkzeugform oder das Halbzeug aufgelegt wird.

Die Steuerungsvorrichtung kann so vorgesehen sein, dass die Führungsbahn in einem Bereich der mit dem Material zu belegenden Oberfläche der Werkzeugform oder des Halbzeugs und die Drehstellung der Abgabe-Vorrichtung derart eingestellt werden, dass das bandförmige Material mit einem Winkel α im Bereich von 45 Grad ± 5 Grad bezüglich der Längsachse der Werkzeugform oder des Halbzeugs in entgegensetzten Längsrichtungen der Werkzeugform oder des Halbzeugs aufgebracht wird, wobei das bandförmige Material eine Breite b in Abhängigkeit des Umfangs C der Werkzeugform bzw. des Bauteils gemäß der Formel

$$b = \frac{C}{\sqrt{2}}$$

± 10% aufweist.

Mit dem vorgenannten Verfahren kann vorgesehen sein, dass als FVW-Bauteil ein Spant, insbesondere ein CFK-Rumpf-Spant oder ein Rumpfsegment eines Flugzeugs hergestellt wird.

Bei dem Verfahren kann als Werkzeugform eine Werkzeugform verwendet werden, die zumindest ein Paar diametral zueinander angeordnete nutförmige Ausnehmungen aufweist, die sich jeweils parallel zu der Längsachse der Werkzeugform erstrecken.

Als Material und insbesondere bandförmiges Material kann ein Material verwendet werden, das aus einem vorimprägnierten Faserverbundwerkstoffband, insbesondere einem unidirektionalen CFK-Prepreg-Band (UD-CFK-Prepreg-Band), gebildet ist. Alternativ hierzu kann ein Material verwendet werden, das aus einem vorimprägnierten Faserbündel oder einem vorimprägnierten Faserstrang (Roving), insbesondere einem CFK-Roving, gebildet ist.

Im Folgenden werden bevorzugte Ausführungsbeispiele der Erfindung anhand schematischer Zeichnungen näher erläutert. Es zeigen:

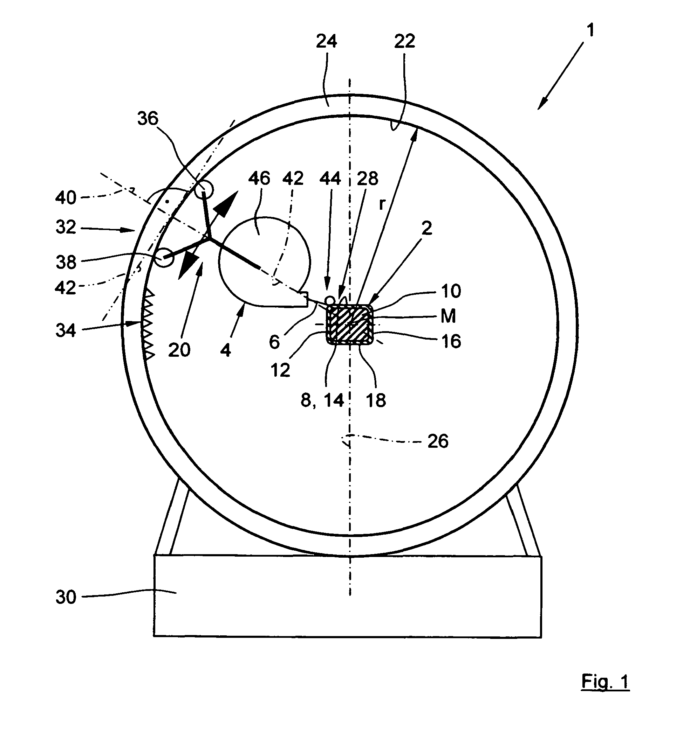

■ Figur 1 eine Vorderansicht einer Vorrichtung zur Herstellung eines Faserverbundwerkstoffbauteils gemäß einem ersten erfindungsgemäßen Ausführungsbeispiel;

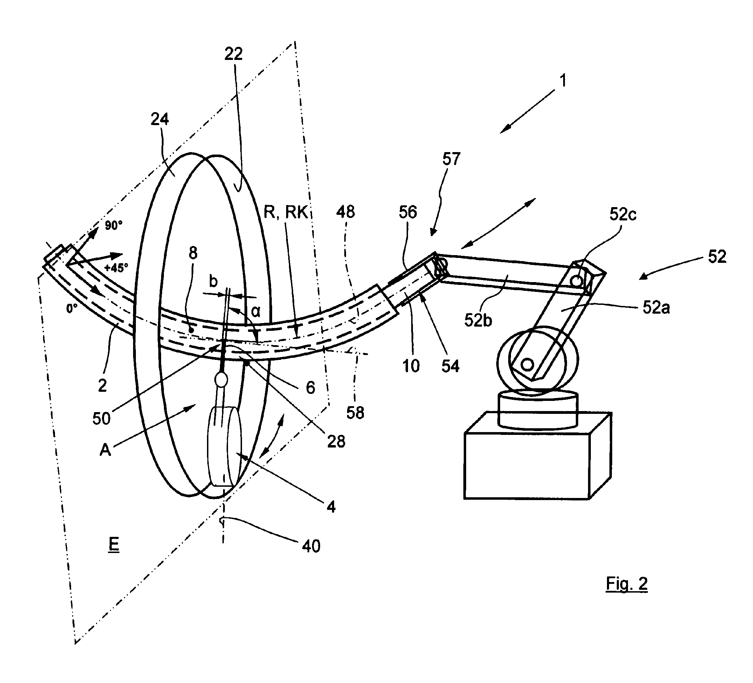

■ Figur 2 eine räumliche Darstellung der Vorrichtung aus Figur 1, gemäß der sich ein Abgabe-Vorrichtung in einer 90°-Arbeitsstellung befindet;

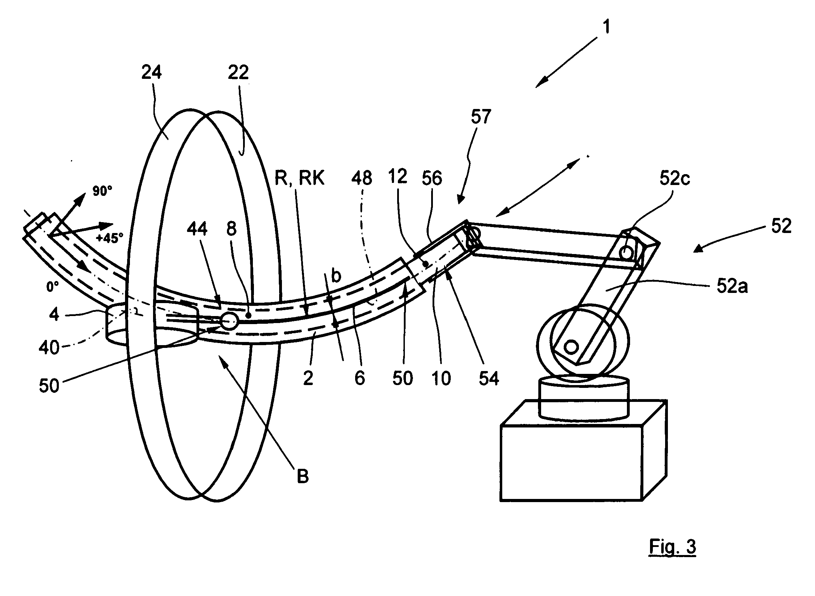

■ Figur 3 eine räumliche Darstellung der Vorrichtung aus Figur 1, dadurch gekennzeichnet, dass sich der Abgabe-Vorrichtung in einer 0°-Arbeitsstellung befindet;

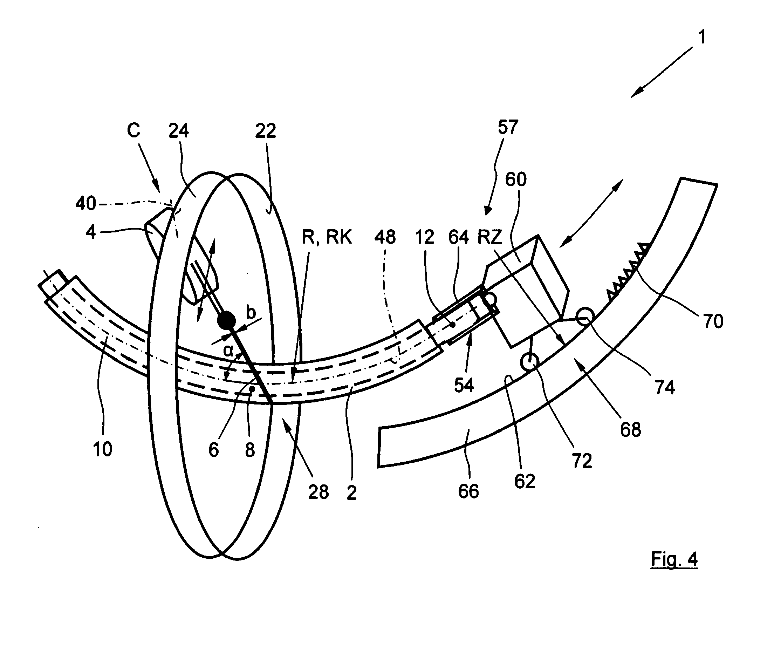

■ Figur 4 eine räumliche Darstellung einer Vorrichtung gemäß einem zweiten erfindungsgemäßen Ausführungsbeispiel, dadurch gekennzeichnet, dass sich die Abgabe-Vorrichtung in einer 45°-Arbeitsstellung befindet;

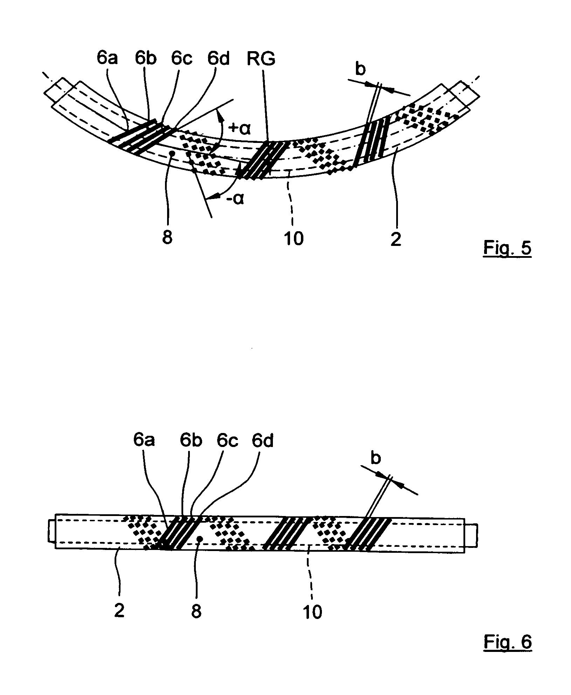

■ Figur 5 eine Seitenansicht der teilweise mit etwa ±45° Faserorientierungen beschichteten Werkzeugform aus Figur 4;

■ Figur 6 eine Draufsicht der teilweise beschichteten Werkzeugform aus Figur 4;

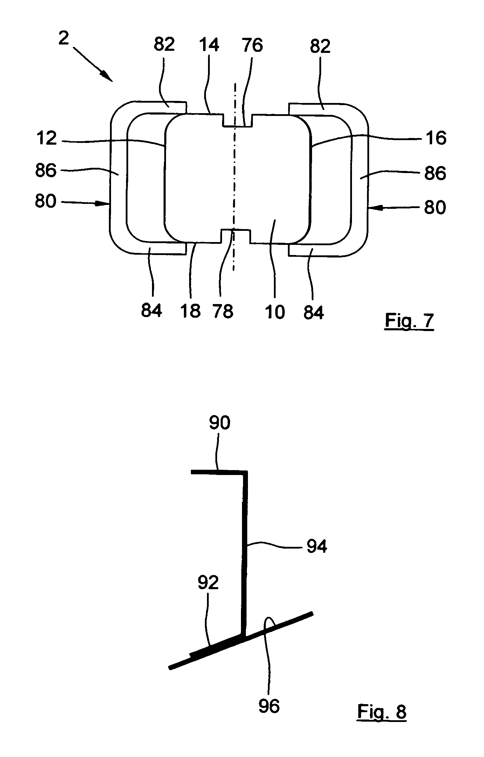

■ Figur 7 ein bereits teilweise entformtes Faserverbundwerkstoffbauteil und die zu dessen Herstellung verwendete Werkzeugform;

■ Figur 8 eine Einzeldarstellung eines CFK-Rumpf-Spants (inkl. Rumpf-Hautabschnitt) mit etwa C-förmigem Querschnitt;

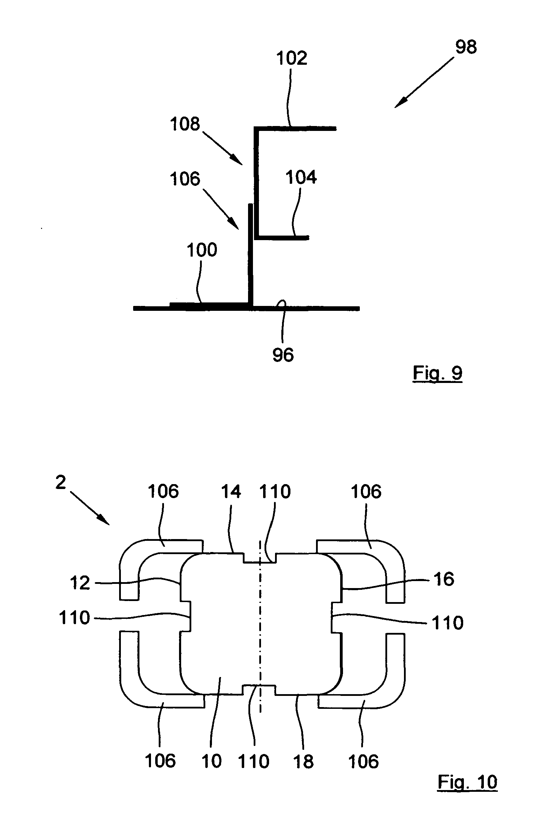

■ Figur 9 eine Einzeldarstellung eines CFK-Rumpf-Spants der mehrere Teilprofile aufweist;

■ Figur 10 eine Werkzeugform zur Herstellung L-förmiger Profile;

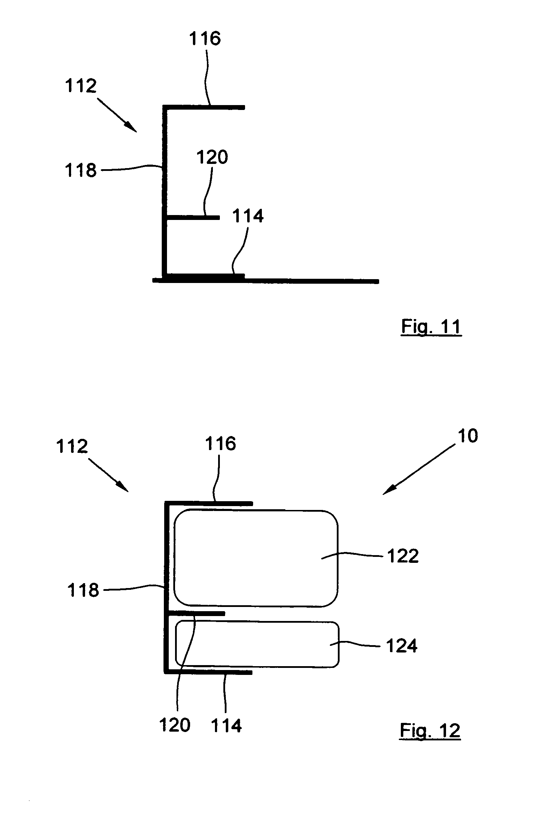

■ Figur 11 ein Ausführungsbeispiel eines CFK-Rumpf-Spants mit etwa E-förmigem Querschnitt;

■ Figur 12 den CFK-Rumpf-Spant aus Figur 11 mit Werkzeugform;

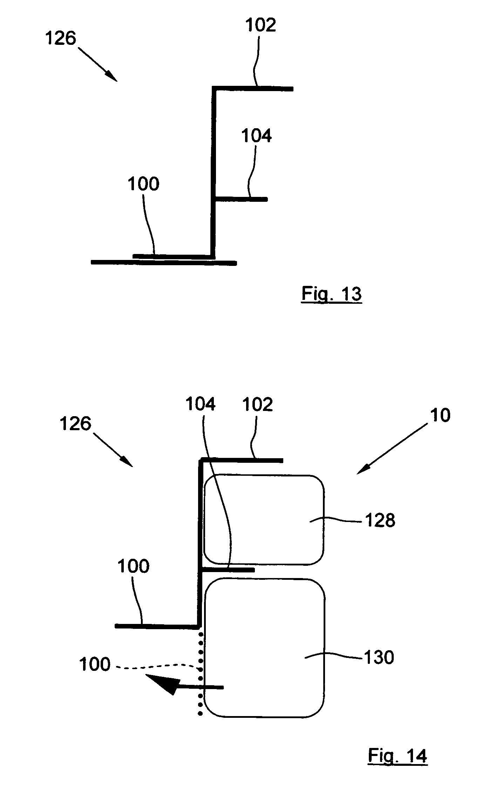

■ Figur 13 einen einstückig ausgebildeten CFK-Rumpf-Spant mit LCF-Querschnitt und

■ Figur 14 den CFK-Rumpf-Spant aus Figur 13 mit Werkzeugform.

Die Figur 1 ist eine Vorderansicht auf die erfindungsgemäße Vorrichtung 1 zur Herstellung eines Bauteils, das zumindest zum Teil aus Faserverbundwerkstoffen gebildet ist, aus einem Halbzeug 2, das das entstehende Bauteil in einem Zwischenstadium oder ein vorgefertigtes Teil zu diesem Zweck sein kann. Das herzustellende Bauteil kann insbesondere ein Flugzeugbauteil sein. Das Halbzeug kann ein vorgefertigtes Zwischenprodukt oder das in der Entstehung befindliche Bauteil sein. Das Material kann auf ein Werkzeugformteil oder kurz ein Formteil oder eine Werkzeugform, beispielsweise eine Positivform (Mandril), oder auf eine bereits mit Material beschichtete Werkzeugform aufgelegt werden. Bei einem Ausführungsbeispiel, das auch in den Figuren dargestellt ist, erfolgt mit der erfindungsgemäßen Vorrichtung 1 bzw. dem erfindungsgemäßen Verfahren eine Herstellung von Spanten, insbesondere von CFK-Rumpf-Spanten, eines Flugzeugs. Insbesondere für Anwendungen der Luft- und Raumfahrttechnik oder im Fahrzeugbau können vorimprägnierte, auch als Prepreg bezeichnete Faserverbundwerkstoffe, die aus einer Harzmischung gebildet sind, unter Einhaltung eines definierten Faservolumengehalts, eines getränkten Verstärkungsfasern verwendet werden. Die Festigkeit des Faserverbundwerkstoffs wird dabei im Wesentlichen durch die Verstärkungsfasern bestimmt. Auf diese Weise kann der Faservolumenanteil für ein gewichtsoptimiertes Bauteil relativ hoch gewählt werden.

Auch kann ein vorimprägniertes Faserbündel oder ein Faserstrang (Roving), insbesondere ein CFK-Roving, zur Beschichtung der Werkzeugform oder des Bauteils eingesetzt werden.

Die Vorrichtung 1 weist einen oder allgemein eine Abgabevorrichtung 4 oder einen Auftragskopf 4 auf, der bzw. die geeignet ist, eine vorbestimmte maximale Menge an Material zur Herstellung des Bauteils aufzunehmen und abzugeben. Beispielsweise kann die Abgabevorrichtung 4 eine Spule zur Aufnahme und Abgabe des Materials aufweisen oder aus dieser bestehen. Die Abgabevorrichtung kann insbesondere ein Gehäuse, in dem das Material z.B. mittels der Spule aufgenommen ist, und eine darin vorgesehene Öffnung zur Hindurchführung des Materials aus dem Inneren des Gehäuses nach außen aufweisen. Die Abgabevorrichtung kann insbesondere eine Zuführ-Vorrichtung aufweisen, mit der die Abgabe des Materials beeinflusst oder gesteuert werden kann. Die Zuführ-Vorrichtung kann einen Motor aufweisen, mit der das Material abgeben oder von einer Spule abgespult werden kann. Bei der Verwendung einer Spule kann der Motor die Spule antreiben, um Material auf die Spule aufzunehmen und/oder von der Spule abzugeben. Der Motor kann mit einer Steuerungsvorrichtung der Herstellungsvorrichtung in Verbindung stehen. Alternativ oder zusätzlich kann die Zuführ-Vorrichtung eine Feder-Einrichtung aufweisen, mit der das Material gegen eine Vorspannkraft abgegeben werden kann. Die Abgabe-Vorrichtung 4 kann zumindest eine Auftragseinrichtung 44 aufweisen, beispielsweise eine Auftragsrolle zum Andrücken oder Aufwickeln des Verbundwerkstoffbands 6 an bzw. auf die Arbeitsoberfläche 8 der Werkzeugform 10. Das Verbundwerkstoffband 6 ist dabei auf einer innerhalb eines Gehäuses 46 der Abgabe-Vorrichtung 4 angeordneten, nicht dargestellten Rolle aufgewickelt und wird über diese der Auftragseinrichtung 44 bereitgestellt.

Als Material für die Verwendung der erfindungsgemäßen Herstellungsvorrichtung bzw. dem erfindungsgemäßen Herstellungsverfahren kommt grundsätzlich jedes Schichtmaterial und insbesondere jedes bandförmige Material in Betracht. Das Material ist insbesondere ein Verbundwerkstoffband 6 (Slit-Tape), d.h. ein Band aus einem Verbundwerkstoff. Als Verbundwerkstoffband 6 kann insbesondere ein unidirektionales CFK-Prepreg-Band (UD-CFK-Prepreg-Band) verwendet werden, das zur Herstellung hochfester Strukturen geeignet ist.

Mit der Abgabevorrichtung 4 wird das Material in definierter Weise auf eine Arbeitsoberfläche 8 einer Werkzeugform 10 oder eines Halbzeugs 2 gelegt. Insbesondere kann das Material z.B. mit einem vorbestimmten Bandverlauf oder einem vorbestimmten Winkel zu der Längsrichtung der Werkzeugform oder des Halbzeugs auf diese bzw. auf dieses aufgelegt werden.

Das Material 6 kann auf eine Werkzeugform aufgelegt werden, die als Positivform 10 (Mandril; Wikkeldorn) ausgebildet ist. Die Werkzeugform 10 kann, wie dargestellt, einen im Wesentlichen rechteckigen Querschnitt mit vier Seitenflächen 12, 14, 16, 18 haben, die eine gemeinsame Arbeitsoberfläche 8 ausbilden, die vollständig oder teilweise mit dem Material 6 beschichtet werden kann. Dabei können insbesondere, zumindest abschnittsweise, auch mehrere Lagen des Materials 6 auf die Werkzeugform 10 aufgelegt werden. Die Herstellungs-Vorrichtung 1 weist eine Führungsbahn 22 zur Führung eines Laufwagens 20 auf. Da auf dem Laufwagen 20 die Abgabe-Vorrichtung oder der Auftragskopf 4 angeordnet ist, kann mit der Bewegung des Laufwagens 20 auf der Führungsbahn 22 die Abgabe-Vorrichtung relativ zu der jeweiligen Arbeitsoberfläche 8 bewegt werden. Gemäß der Erfindung ist die Abgabe-Vorrichtung 4 drehbar auf dem Wagen 20 angeordnet. Die Drehachse der Abgabe-Vorrichtung 4 kann dabei unveränderlich, also starr, oder veränderlich vorgesehen sein. In letzterem Fall kann die Drehachse also verschwenkt werden. Die Veränderung der Drehachse kann dabei manuell oder mit einer von einer Steuerungsvorrichtung angesteuerten Stelleinrichtung erfolgen.

Durch die Lage der Führungsbahn 22 relativ zur Werkzeugform und dem Bereich, auf dem beim Herstellungsverfahren momentan das Material auf die Oberfläche der Werkzeugform gelegt wird, sowie durch das Fahren des Wagens kann der Winkel, mit der das Material oder das Materialband auf die Werkzeugform aufgelegt wird, beeinflusst und festgelegt werden, entlang einer zu der Bewegungsbahn, vorzugsweise in Richtung der Arbeitsoberfläche, angestellten Schwenkachse verschwenkbar. Der Auftragskopf kann in einer definierten Arbeitsstellung entlang der Bewegungsbahn bewegt oder gegebenenfalls während einem Umlauf entlang der Bewegungsbahn um die Schwenkachse gedreht werden, beispielsweise um eine spiralförmige Beschichtung auszubilden.

Als besonders vorteilhaft hat es sich erwiesen, wenn die Bewegungsbahn als eine kreisförmige Kurvenbahn ausgebildet ist, so dass sich der zu bearbeitende Abschnitt der Werkzeugform oder des Bauteils im Bereich eines Zentrums, vorzugsweise eines Mittelpunkts, der Bewegungsbahn befindet.

Zur Aufbringung des Verbundwerkstoffs mit einem Winkel von 0° bezüglich der Längsachse der Werkzeugform oder des Bauteils ist der Laufwagen beispielsweise entlang der Bewegungsbahn in einen Bereich der zu beschichtenden Arbeitsoberfläche der Werkzeugform oder des Bauteils verfahrbar und der Auftragskopf um die Schwenkachse in eine Arbeitsstellung verschwenkbar, in welcher der Verbundwerkstoff einen Winkel von 0° bezüglich der Längsachse der Werkzeugform oder des Bauteils aufweist.

Zur Aufbringung des Verbundwerkstoffs mit einem Winkel im Bereich von mehr als 0° bis etwa 90° ist der Auftragskopf um die Schwenkachse in eine Arbeitsstellung verschwenkbar, in welcher der Verbundwerkstoff mit einem Winkel im Bereich von mehr als 0° bis etwa 90°, vorzugsweise von ±45°, ±60° und/oder 90° bezüglich einer Längsachse der Werkzeugform oder des Bauteils auf diese aufbringbar ist.

Bei Werkzeugformen oder Bauteilen, die eine Vielzahl von Arbeitsflächen aufweisen, kann für jede Arbeitsfläche zumindest ein Auftragskopf zur parallelen Aufbringung zumindest eines Verbundwerkstoffs, insbesondere eines Verbundwerkstoffbands vorgesehen sein.

Zur Verbesserung der Prozesseffizienz können Auftragsköpfe verwendet werden, mittels denen zeitgleich mehrere Verbundwerkstoffbänder- oder stränge auf die Werkzeugform bzw. das Bauteil aufgebracht werden. Die Winkel der einzelnen Verbundwerkstoffbänder- oder stränge können unabhängig voneinander einstellbar sein, so dass bei gekrümmten Werkzeugformen bzw. Bauteilen eine Aufspreizung in Richtung des größeren Krümmungsradius vermieden wird.

Die Breite der Verbundwerkstoffbänder kann bei der Verwendung von Auftragsköpfen mit mehreren Verbundwerkstoffbändern, mehreren Auftragsköpfen und/oder Trägerringen unterschiedlich sein, um die Prozesseffizienz weiter zu verbessern.

Die Führungsbahn 22 kann als geschlossene Bahn oder als offene Bahn oder als Führungsbahn-Abschnitt ausgebildet sein. Die Führungsbahn 22 kann insbesondere, wie es in dem in der Figur 1 dargestellten Ausführungsbeispiel vorgesehen ist, als Kreisbahn ausgebildet sein. Zur Abstützung der Führungsbahn 22 kann diese an einem Trägerteil 24 angeordnet sein oder mit diesem einteilig gebildet sein. Das Trägerteil kann abschnittsweise ringförmig oder als geschlossener Ring gebildet sein und dabei jeweils insgesamt kreisringförmig gebildet sein. Allgemein ist die Führungsbahn gekrümmt unter Ausbildung eines über die Längserstreckung derselben variablen oder konstanten Krümmungsradius KR gebildet. Dabei ist die Führungsbahn derart gestaltet, dass der Wagen 20 auf der Innenseite der Führungsbahn bewegt werden kann. Auch kann die Führungsbahn kurvenlinig gebildet sein.

Hierbei kann vorgesehen sein, dass der Krümmungsradius der Kurvenbahn zumindest abschnittsweise der Krümmung der Werkzeugform oder des Bauteils entspricht. Werkzeugformen bzw. Bauteile, die einen Krümmungsverlauf mit mehreren Krümmungsradien aufweisen sind erfindungsgemäß ebenfalls herstellbar.

Die Führungsbahn 22 und/oder das Trägerteil sind bei der Durchführung des Verfahrens bzw. bei einer Ausführungsform der Herstellungsvorrichtung vorzugsweise derart relativ zum Werkstückform gelegen, dass die Längserstreckung der Führungsbahn quer zur Längserstreckung einer länglichen Werkstückform verläuft, so dass die Führungsbahn die Werkzeugform 10 beabstandet zumindest teilweise umgibt oder umgreift. Das Trägerteil 24 kann von einem Gestell 30 gestützt sein. Weiterhin können mehrere Trägerringe entlang der Längsachse der Werkzeugform bzw. des Bauteils hintereinander angeordnet sein, dadurch gekennzeichnet, dass insbesondere unterschiedliche Winkel der Verbundwerkstoffbänder- oder -stränge in einem Arbeitsgang aufbringbar sind.

Bei der Ausbildung der Führungsbahn 22 als geschlossene Kreisbahn (Figur 1) kann die Werkzeugform 10 derart zu dem Trägerring 24 statisch oder gesteuert bei einer Relativbewegung zwischen der Führungsbahn und der Werkzeugform oder dem Halbzeug positioniert sein, dass sich die Seitenflächen 12, 16 der Werkzeugform oder des Halbzeugs parallel zu der Hochachse 26 des Trägerrings 24, erstrecken. Weiterhin kann die Relativbewegung zwischen der Führungsbahn und der Werkzeugform oder dem Halbzeug mechanisch so eingestellt oder derart gesteuert sein, dass der Bereich der Oberfläche, auf den zu einem gegebenen Zeitpunkt das Material 6 aufgelegt wird, im Bereich eines Mittelpunkts M des Trägerrings 24, d.h. mit einer Abweichung von 10% vom Krümmungsradius KR, angeordnet ist.

Erfindungsgemäß kann vorgesehen sein, dass der Trägerring zumindest eine Laufschiene zur Aufnahme einer Rollenanordnung 32 des Laufwagens aufweist. Der Laufwagen 20 kann dabei durch die Rollen angetrieben sein. Alternativ oder zusätzlich kann der Trägerring zumindest einen Verzahnungsabschnitt aufweisen, der mit mindestens einem Antriebsrad des Laufwagens in Eingriff bringbar ist. Das Antriebsrad ist beispielsweise als in eine Zahnstange des Trägerteils eingreifendes Zahnrad ausgebildet. Auch können andere Antriebssysteme zur Bewegung des Laufwagens entlang der Bewegungsbahn verwendet werden. In der Darstellung nach der Figur 1 weist die Führungsbahn eine nicht dargestellte Laufschiene zur Aufnahme einer Rollenanordnung 32 des Laufwagens 20 sowie einen schematisch angedeuteten Verzahnungsabschnitt 34 auf, der mit einem nicht dargestellten Antriebsrad des Laufwagens 20 in Eingriff ist. Der Verzahnungsabschnitt 34 erstreckt sich entlang der gesamten Bewegungsbahn 22. Das Antriebsrad kann beispielsweise als Zahnrad ausgebildet sein, das in eine Zahnstange des Trägerrings 24 eingreift. Die Rollenanordnung 32 hat zwei entlang der Bewegungsbahn 22 zueinander beabstandete Rollenpaare 36, 38.

Bei einer Drehbarkeit der Abgabe-Vorrichtung 4 zur Einstellung des Verlaufs der Längsrichtung des aufgelegten Materials 6 ist diese für das Auflegen des Materials 6 um zu einer zu der Bewegungsbahn 22 in Richtung der Werkzeugform 10 angestellten Schwenkachse 40 drehbar. Die Werkzeugform bzw. das Bauteil kann dabei derart angeordnet sein, dass die Schwenkachse 40 bei dem dargestellten Ausführungsbeispiel der Vorrichtung unter einem Winkel von etwa 90° zu einer an den Krümmungsradius R der Bewegungsbahn 22 angelegten Tangente 42 verläuft und sich durch den Mittelpunkt M der Kreisbahn erstreckt.

Bei dieser Realisierung kann die Herstellung eines Faserverbundwerkstoffbauteils optimiert werden. Die erfindungsgemäße Vorrichtung 1 ist aufgrund des entlang der die Arbeitsoberfläche 8 umgreifenden Bewegungsbahn 22 bewegbaren Laufwagens 20, der verschwenkbaren Abgabe-Vorrichtung 4 sowie der Zustellbewegung zwischen Werkzeugform 10 und Bewegungsbahn 22 in der Lage, die gekrümmte Werkzeugform 10 zur Herstellung von CFK-Rumpf-Spanten vorrichtungstechnisch einfach zu beschichten. Das Aufbringen des Verbundwerkstoffbands 6 auf die Arbeitsoberfläche 8 kann flächig, partiell oder gemäß anderen programmierbaren Mustern erfolgen. Die Schichtfolge und Anzahl der aufgebrachten Verbundwerkstoffbänder ist je nach Anwendungsfall einstellbar. Insbesondere ist das Verbundwerkstoffband 6 mit unterschiedlichen Bandwinkeln bezüglich der Längsachse der Werkzeugform 10 aufbringbar. Weiterhin sind beliebige Zwischenwinkel und Winkelverläufe einstellbar. Dies wird im Folgenden anhand beispielhafter Arbeitsstellungen A, B, C der Abgabe-Vorrichtung 4 näher erläutert.

Die erfindungsgemäße Vorrichtung ist dadurch in der Lage, insbesondere eine gekrümmte Werkzeugform oder ein gekrümmtes Bauteil sowie andere komplexe Bauteilgeometrien vorrichtungstechnisch einfach zu beschichten, dadurch gekennzeichnet, dass unter dem Begriff Bauteil im Rahmen der Erfindung insbesondere auch ein Teil eines Bauteils oder ein Halbzeug verstanden wird. Aufgrund der flexiblen Winkelorientierung und der Möglichkeit lokale Verstärkungen aufzubringen wird eine Gewichtsreduktion der Bauteile bei hoher Festigkeit erreicht. Die Schichtfolge und Anzahl der aufgebrachten Schichten ist je nach Anwendungsfall variierbar. Hierbei kann der Faserverlauf an den Lastpfad des Bauteils angepasst werden, so dass die Herstellung leichter, hochfester Strukturen möglich ist. Der Verbundwerkstoff kann beispielsweise mit einem Winkel von etwa 0°, ±45°, ±60° und/oder 90° bezüglich der Längsachse der Werkzeugform oder der Längsachse des Bauteils auf die Arbeitsoberfläche aufgebracht werden. Ferner sind beliebige Zwischenwinkel und Winkelverläufe mittels der erfindungsgemäßen Vorrichtung einstellbar.

Wie insbesondere Figur 2 zu entnehmen ist, die eine räumliche Darstellung der Vorrichtung 1 aus Figur 1 zeigt, ist das Verbundwerkstoffband 6 bei der dargestellten Arbeitsstellung A der Abgabe-Vorrichtung 4 mit einem Bandwinkel $\alpha$ von 90° bezüglich einer Längsachse 48 der Werkzeugform 10 auf die Arbeitsoberfläche 8 aufbringbar. Hierzu ist der Abgabe-Vorrichtung 4 um die Schwenkachse 40 in die Arbeitsstellung A verschwenkt, in der das Verbundwerkstoffband 6 mit dem gewünschten Bandwinkel $\alpha$ von 90° bezüglich der Längsachse 48 auf die Werkzeugform 10 bzw. auf bereits aufgebrachtes Bandmaterial aufgebracht wird. Ein Endabschnitt 50 des Verbundwerkstoffbands 6 wird auf der Arbeitsoberfläche 8 der Werkzeugform 10 platziert und der Abgabe-Vorrichtung 4 beabstandet zu der Arbeitsoberfläche 8 mittels dem in Figur 2 nicht dargestellten Laufwagen 20 (siehe Figur 1) entlang der Bewegungsbahn 22 um 360° verfahren, so dass das Verbundwerkstoffband 6 auf die Werkzeugform 10 gewickelt wird. Anschließend wird das Band 6 getrennt und die Werkzeugform 10 relativ zu der Bewegungsbahn 22 entsprechend dem Betrag einer Bandbreite b verfahren. Dieser Ablauf wird wiederholt, bis der gewünschte Bereich der Werkzeugform 10 mit einem definierten Lagenaufbau versehen ist. Anschließend, zwischengeschaltet oder diesem Prozess vorgeschaltet kann ein Aufbringen des Verbundwerkstoffbands 6 mit anderen Bandwinkeln erfolgen. Für eine effizientere Beschichtung wird der 90°-Bandwinkel um eine Winkelabweichung verkleinert, die von dem Umfang der Werkzeugform 10 und der Bandbreite b abhängig ist. Dies ermöglicht eine durchgängige, spiralförmige Beschichtung der Werkzeugform 10 in einem Arbeitsgang. In Abhängigkeit der Drehgeschwindigkeit des Laufwagens 20 (siehe Figur 1) entlang der Bewegungsbahn 22 und der Zustellgeschwindigkeit der Werkzeugform 10 kann der Bandwinkel $\alpha$ unterschiedlich eingestellt werden.

Die Bewegung der Werkzeugform oder des Formwerkzeugs oder allgemein des Werkzeugs 10 relativ zu dem Trägerring 24 erfolgt mittels einer Zustellvorrichtung Z, die manuell oder mittels einer Steuerungseinrichtung betätigt werden kann. Die Zustellvorrichtung ist zur Durchführung einer Zustellbewegung der Werkzeugform 10 oder des Halbzeugs 2 relativ zur Führungsbahn 22 vorgesehen und weist eine Kopplungsvorrichtung zum Halten oder Befestigen eines Abschnitts oder eines Endabschnitts 54 der Werkzeugform 10 oder des Halbzeugs 2 auf. Die Zustellvorrichtung kann einen Stellarm oder Roboterarm 52 mit der Kopplungsvorrichtung oder einem auf einer Zustellbahn 62 bewegbaren Wagen 60 mit der Kopplungsvorrichtung aufweisen. Der Stellarm oder der Roboterarm 52 bzw. der Wagen 62 wird von einer Stellmechanik oder einer Führungseinrichtung bewegt, die Teil der Zustellvorrichtung ist oder der Zustellvorrichtung zugeordnet und mit dieser funktional verbunden ist. die Stellmechanik kann insbesondere die Antriebsvorrichtung zur Betätigung der Zustellvorrichtung aufweisen. Die Führungsvorrichtung kann die Funktionen zur Steuerung, Regelung der Betätigung der Zustellvorrichtung oder der Stellmechanik aufweisen. Die Stellmechanik oder die Führungseinrichtung kann insbesondere Teil einer Bewegungssteuerung sein. Die Bewegungssteuerung kann Steuerungsfunktionen zur dreidimensionalen Bewegung des Stellarms oder des Roboterarms 52 bzw. zur Bewegung des Laufwagens 20 entlang der Bewegungsbahn 22 und/oder der Abgabe-Vorrichtung 4 entlang der Schwenkachse 40 und/oder der Werkzeugform 10 oder des Halbzeugs 2 und/oder der Bewegungsbahn 22 jeweils relativ zueinander aufweisen. Dazu kann die Bewegungssteuerung die Stellmechanik oder Führungseinrichtung zur dreidimensionalen Bewegung des Stellarms oder des Roboterarms 52 bzw. zur Bewegung des Laufwagens 20 entlang der Bewegungsbahn 22 und/oder der Abgabe-Vorrichtung 4 entlang der Schwenkachse 40 und/oder der Werkzeugform 10 oder des Halbzeugs 2 und/oder der Bewegungsbahn 22 jeweils relativ zueinander aufweisen.

Bei dem Ausführungsbeispiel der Kopplungsvorrichtung der Zustellvorrichtung mit einer Kombination aus einer Zustellbahn 62 mit einem auf dieser bewegbaren Wagen 60 bzw. einem Stellarm oder Roboterarm 52 weisen diese eine Kopplungsvorrichtung auf, mit der an dem Wagen 60 bzw. dem Stellarm oder Roboterarm 52 und insbesondere an einem Endabschnitt des Wagens 60 bzw. Arms 52 ein Endabschnitt 54 der Werkzeugform 10 oder des Halbzeugs 2 befestigt werden kann. Dadurch kann mit Bewegung des Wagens 60 bzw. des Stellarms oder Roboterarms 52 die Werkzeugform 10 oder das Halbzeug 2 relativ zur Bewegungsbahn 22 und/oder der Abgabe-Vorrichtung 4 bewegt werden. Die Kopplungsvorrichtung des Wagens 60 bzw. des Stellarms oder Roboterarms 52 kann zur Befestigung der Werkzeugform 10 oder des Halbzeugs 2 derart ausgeführt sein, dass diese die Werkzeugform 10 oder das Halbzeug 2 und insbesondere einen Endabschnitt derselben bzw. desselben zumindest abschnittsweise umgreifen kann. Auch können andere Befestigungsmittel vorgesehen sein. Z.B. kann die Kopplungsvorrichtung derart ausgeführt sein, dass diese insbesondere einen Endabschnitt der Werkzeugform 10 oder des Halbzeugs 2 formschlüssig aufnimmt.

Dabei kann die Zustellvorrichtung insbesondere einen Stellarm oder Roboterarm 52 aufweisen (Figuren 2 und 3), der außerhalb der Führungsbahn 22 oder des Trägerrings 24 angeordnet ist und der mit der Werkzeugform z.B. derart verbunden ist, dass dieser einen Endabschnitt 54 der Werkzeugform 10 abschnittsweise mit einem Greifer 56 umgreift. Der Stellarm 52 kann insbesondere aus einem ersten Arm 52a und einem an dem ersten Arm 52a mittels eines Gelenks 52c angekoppelten zweiten Arm 52b gebildet sein, an dem die Kopplungsvorrichtung 57 angeordnet ist. Beispielsweise ist die Werkzeugform oder das Halbzeug 10 entsprechend dem Querschnitt des Flugzeugrumpfs im Bereich des Spants gekrümmt, so dass diese eine bogenförmige Längsachse 48 aufweist. Bei der Verwendung eines Halbzeugs ohne einer Werkzeugform oder bei Befestigung des Halbzeugs an der Kopplungsvorrichtung ist das Halbzeug dazu z.B. durch Nähen oder Vorhärten in einem formstabilen Zustand gebracht worden. Zur Beschichtung der Werkzeugform zur Bildung eines Halbzeugs oder eines Vorformlings zur Herstellung des herzustellenden Bauteils oder des Halbzeugs kann diese bzw. dieses mittels des Arms 52 bzw. des Wagens 60 relativ zu der Bewegungsbahn 22 entlang einer Kurvenbahn (Zustellbahn) verfahren werden. Diese Kurvenbahn kann derart vorgesehen sein, dass diese dreidimensional zu beschreiben ist. Insbesondere kann diese in einer Ebene gelegen sein. Insbesondere wenn die Mittellinie des Halbzeugs oder die Werkzeugform in einer Ebene gelegen ist, kann vorgesehen sein, dass die Kurvenbahn ebenfalls in einer Ebene gelegen ist. Als Mittellinie kann insbesondere die Verbindungslinie der Flächenschwerpunkte der jeweils kleinsten Querschnitte entlang der Längsrichtung des Halbzeugs oder die Werkzeugform verwendet werden.

Hierbei kann vorgesehen sein, dass der die Krümmung mit dem generell ortsabhängigen Krümmungsradius RK, welche die durch den Arm 52 oder dessen Endabschnitt bzw. den Wagen 60 mittels der Bewegungssteuerung oder Bewegungsmechanik vollzogene Kurvenbahn aufweist, die Krümmung bzw. dem Krümmungsradius R der Werkzeugform 10 in Bezug auf dessen Längsachse 48 oder Mittellinie entspricht oder diese nachvollzieht. Dabei kann eine Abweichung von 10 % in Bezug auf die Länge des Halbzeugs bzw. der Werkzeugform erlaubt sein. Die Werkzeugform 10 kann weiterhin derart zu dem Trägerring 24 positioniert werden, dass eine im Bereich des zu bearbeitenden Abschnitts 28 der Werkzeugform 10 an den Krümmungsbogen derselben angelegte Tangente 58 mit einem Winkel von 90 Grad ± 15 Grad und insbesondere ± 5 Grad zu einer von einem relevanten Abschnitt der Führungsbahn 22 aufgespannten Ebene E verläuft. Der Vorrichtung 1 ist eine nicht dargestellte Steuerungseinrichtung insbesondere mit einer CNC-Steuerung zugeordnet zur Bewegungssteuerung des Laufwagens 20 entlang der Bewegungsbahn 22 und/oder der Abgabe des Materials von der Abgabe-Vorrichtung 4 und/oder der Drehung der Abgabe-Vorrichtung 4 und/oder gegebenenfalls der Veränderung der Schwenkachse und/oder die Zustellbewegung der Werkzeugform 10 bzw. des Halbzeugs 2 relativ zu der Bewegungsbahn 22. Besonders vorteilhaft ist es, wenn die Bewegung des Laufwagens 20 entlang der Bewegungsbahn 22 sowie die Zustellbewegung der Werkzeugform 10 bzw. des Halbzeugs 2 in Abhängigkeit voneinander erfolgen. Die Zustellbewegung der Werkzeugform 10 bzw. des Halbzeugs 2 kann beispielsweise synchron zu der Bewegung des Laufwagens 20 und/oder mit einem definierten Über- oder Untersetzungsverhältnis erfolgen, um den Bandwinkel α (der Winkel zwischen der Längsrichtung des Materials beim Auflegen desselben auf die Oberfläche 8 und der Tangente an die Mittel-Längsachse der Werkzeugform 10 bzw. des Halbzeugs an der Stelle, an der das Material momentan auf die Oberfläche 8 aufgelegt wird, und in der Tangentialebene der Oberfläche 8 gesehen) einzustellen. Bei einer alternativen Variante zur Herstellung eines Lagenaufbaus mit einem Bandwinkel α von 90° ±5 Grad wird der Trägerring 24 relativ zu der Werkzeugform 10 verfahren.

Die Figur 3 zeigt eine räumliche Darstellung der Vorrichtung 1 aus Figur 1, bei der sich die Abgabe-Vorrichtung 4 in einer Arbeitsstellung B befindet, gemäß der das Verbundwerkstoffband 6 mit einem Bandwinkel α von etwa 0° bezüglich der Längsachse 48 der Werkzeugform 10 auf die Arbeitsoberfläche 8 aufgebracht wird. Zur Herstellung eines Lagenaufbaus mit einem Bandwinkel α von 0° bezüglich der Längsachse 48 der Werkzeugform 10 wird der Abgabe-Vorrichtung 4 entlang der am Trägerring 24 ausgebildeten Bewegungsbahn 22 in einen Bereich der zu beschichtenden Arbeitsoberfläche 8 der Werkzeugform 10 verfahren und um die Schwenkachse 40 in die 0°-Arbeitsstellung B verschwenkt, in der das Verbundwerkstoffband 6 mit einem Bandwinkel α von 0° bezüglich der Längsachse 48 der Werkzeugform 10 auf diese aufbringbar ist. Der Endabschnitt 50 des Verbundwerkstoffbands 6 wird auf der Arbeitsoberfläche 8 mittels der Auftragseinrichtung 44 platziert. Anschließend wird die Werkzeugform 10 mittels des Roboterarms 52 entlang der dem Krümmungsradius R der Werkzeugform 10 entsprechenden Kurvenbahn relativ zu der Bewegungsbahn 22 bewegt, dadurch gekennzeichnet, dass das Verbundwerkstoffband 6 mittels der Abgabe-Vorrichtung 4 auf die Arbeitsoberfläche 8 aufgelegt wird (Faserlegen). Der Abgabe-Vorrichtung 4 hält seine Position an dem Trägerring 24, während die Werkzeugform 10 relativ zu dem Trägerring 24 bewegt wird.

Bei der dargestellten Werkzeugform 10 mit einem im Wesentlichen rechteckigen Querschnitt sind die vier Seitenflächen 12, 14, 16, 18 (siehe Figur 1) der Werkzeugform 10 beispielsweise beschichtbar, in dem der Abgabe-Vorrichtung 4 jeweils um 90° entlang der Bewegungsbahn 22 verfahren wird. Hierbei wird der Abgabe-Vorrichtung 4 aus der dargestellten 9-Uhr-Position entlang der Bewegungsbahn 22 in eine 6- oder 12-Uhr und anschließend in eine 3-Uhr-Position verfahren. Ferner kann bei derartigen Werkzeugformen 10 oder anderen Bauteilen, die eine Vielzahl von Seitenflächen 12, 14, 16, 18 aufweisen, für jede Seitenfläche zumindest ein Abgabe-Vorrichtung 4 vorgesehen sein, dadurch gekennzeichnet, dass die Beschichtung der Seitenflächen zeitgleich erfolgen kann. Die Bandbreite b zumindest einer Abgabe-Vorrichtung 4 kann ferner derart gewählt sein, dass die Seitenflächen 12, 14, 16, 18 jeweils mit einem Arbeitsgang vollständig mit dem Verbundwerkstoffband 6 belegt werden.

Bei einer nicht dargestellten Variante der Vorrichtung wird der Trägerring 24 relativ zu der Werkzeugform 10 verfahren.

Ein als Verbundwerkstoffband ausgebildeter Verbundwerkstoff ist gemäß der erfindungsgemäßen Lösung mit unterschiedlichen Bandwinkeln bezüglich einer Längsachse der Werkzeugform bzw. des Bauteils aufbringbar. Bei einem Bandwinkel im Bereich von etwa 45° bezüglich der Längsachse der Werkzeugform oder des Bauteils hat es sich als vorteilhaft erwiesen, wenn die Breite b des Verbundwerkstoffbands eine Abhängigkeit des Umfangs C der Werkzeugform bzw. des Bauteils gemäß der Formel

$$b = \frac{C}{\sqrt{2}}$$

aufweist. Bei einer derartigen Breite b des Verbundwerkstoffbands kann mit einem Arbeitsgang eine vollständige Abdeckung der Werkzeugform oder des Bauteils erreicht werden.

In Figur 4 ist eine räumliche Darstellung einer Vorrichtung 1 mit einer Arbeitsstellung C der Abgabe-Vorrichtung 4 gezeigt, bei der das Verbundwerkstoffband 6 mit einem Bandwinkel α von 45° bezüglich der Längsachse 48 der Werkzeugform 10 auf die Arbeitsoberfläche 8 aufgebracht wird. Zur Herstellung eines Lagenaufbaus mit einem Bandwinkel α von 45° wird der Abgabe-Vorrichtung 4 um die Schwenkachse 40 in eine 45°-Stellung gedreht. Anschließend wird die Werkzeugform 10 entsprechend dem Krümmungsradius R der Werkzeugform 10 relativ zu der Bewegungsbahn 22 und der Abgabe-Vorrichtung 4 entlang der Bewegungsbahn 22 bewegt, dadurch gekennzeichnet, dass das Verbundwerkstoffband 6 mittels der Abgabe-Vorrichtung 4 um die Werkzeugform 10 gewickelt wird. Bei dem dargestellten Bandwinkel α von etwa 45° bezüglich der Längsachse 48 der Werkzeugform 10 hat es sich als vorteilhaft erwiesen, wenn die Breite b des Verbundwerkstoffbands 6 eine Abhängigkeit bezüglich des Umfangs C der Werkzeugform 10 gemäß der Formel

$$b = \frac{C}{\sqrt{2}}$$

aufweist. Bei einer derartigen oder größeren Breite b des Verbundwerkstoffbands 6 wird bei einem Arbeitsgang eine vollständige Abdeckung der Werkzeugform 10 erreicht. Gemäß dem in Figur 4 dargestellten, insbesondere für eine Werkzeugform 10 mit konstantem Krümmungsradius R geeigneten Ausführungsbeispiel der Erfindung, wird die Werkzeugform 10 von einem Zustellwagen 60 geführt, der entlang einer Zustellbahn 62 bewegbar ist, wobei die Werkzeugform oder das Halbzeug oder ein Endabschnitt derselben bzw. desselben mittels der Kopplungsvorrichtung an dem Zustellwagen 60 befestigt werden kann. Insbesondere kann die Kopplungsvorrichtung einen Greifer 64 aufweisen, mit dem ein Abschnitt oder ein Endabschnitt 54 der Werkzeugform 10 zumindest abschnittsweise umgriffen werden kann. Die Zustellbahn 62 ist bei dieser Variante als Kurvenbahn auf einem Trägerteil 66 ausgebildet. Der Krümmungsradius RZ der Zustellbahn 62 kann insbesondere dem Krümmungsradius R der Werkzeugform 10 entsprechen. Die Werkzeugform 10 ist derart positioniert, dass sich der zu bearbeitende Abschnitt 28 der Werkzeugform 10 im Bereich des Zentrums des Trägerrings 24 befindet. Das Trägerteil 66 hat eine nicht dargestellte Laufschiene zur Aufnahme einer Rollenanordnung 68 des Zustellwagens 60 und weist einen schematisch angedeuteten Verzahnungsabschnitt 70 auf, der mit einem nicht dargestellten Antriebsrad des Zustellwagens 60 in Eingriff ist. Der Verzahnungsabschnitt 70 erstreckt sich vorzugsweise entlang der gesamten Zustellbahn 62. Die Rollenanordnung 68 hat zwei entlang der Zustellbahn 62 zueinander beabstandete Rollenpaare 72, 74. Das Antriebsrad kann beispielsweise als Zahnrad ausgebildet sein, das in eine Zahnstange des Trägerteils 66 eingreift.

Erfindungsgemäß ist es möglich, mehr als einen Auftragskopf entlang der Bewegungsbahn des Trägerrings anzuordnen. Beispielsweise kann zumindest ein Paar von um einen Winkel von etwa 180° zueinander versetzt auf der Bewegungsbahn verfahrbaren Auftragsköpfen vorgesehen sein. Vorteilhaft bei einer um 180° zueinander versetzten Anordnung der Auftragköpfe ist die Kompensation der Andrückkräfte auf die Werkzeugform bzw. das Bauteil. Bei dieser Variante kann eine vollständige Abdeckung der Werkzeugform oder des Bauteils mit einem Arbeitsgang bei reduziertem Gewicht der Vorrichtung erzielt werden. Die Auftragsköpfe können ferner unabhängig voneinander verfahrbar sein, dadurch gekennzeichnet, dass es vorteilhaft ist, wenn die Steuerung der Auftragsköpfe basierend auf einer gemeinsamen Zeitbasis erfolgt. Als besonders vorteilhaft hat sich die Vorrichtung zur Herstellung von Spanten, insbesondere von CFK-Rumpf-Spanten, oder Rumpfsegmenten eines Flugzeugs erwiesen. Die Steg- und Flanschhöhe sowie die Dicke des Lagenaufbaus kann entlang der Längserstreckung des Bauteils variabel oder konstant sein.

Gemäß der Figuren 5 und 6, die eine Einzeldarstellung der teilweise beschichteten Werkzeugform 10 aus Figur 4 in einer Seitenansicht und einer Draufsicht zeigen, können zur Verbesserung der Prozesseffizienz mehrere Auftragsköpfe 4 verwendet werden, mittels denen zeitgleich mehrere Verbundwerkstoffbänder 6 auf die Arbeitsoberfläche 8 aufgebracht werden. Bei dem dargestellten Ausführungsbeispiel wurden vier Verbundwerkstoffbänder 6a, 6b, 6c, 6d zeitgleich aufgebracht. Die Bandwinkel der einzelnen Verbundwerkstoffbänder 6a, 6b, 6c, 6d können hierbei unabhängig voneinander einstellbar sein, so dass die bei gekrümmten Werkzeugformen 10 auftretende, in Figur 5 dargestellte Bandaufspreizung in Richtung des größeren Krümmungsradius RG der Werkzeugform 10 vermieden wird. Die Breiten b der Verbundwerkstoffbänder 6a, 6b, 6c, 6d können bei der Verwendung von Auftragsköpfen 4 mit mehreren Verbundwerkstoffbändern unterschiedlich sein, um die Prozesseffizienz weiter zu verbessern. Insbesondere kann das Material mit einer konstanten Drehstellung der Abgabevorrichtung bei einem entsprechenden Vorschub der Werkzeugform oder des Halbzeugs auf diese bzw. auf dieses abgelegt werden, was für den Fall einer Drehstellung von $\alpha = 45°$ in den Figuren 5 und 6 dargestellt ist.

Der Spant kann einen C-förmigen Querschnitt aufweisen und einstückig ausgebildet sein. Weiterhin kann der Spant mehrere Teilprofile, wie beispielsweise ein L- und ein C-Profil aufweisen. Ferner ist ein Spant mit E-förmigem Querschnitt herstellbar. Hierzu werden vorzugsweise zwei Kerne verwendet, die in einem ersten Arbeitsschritt separat und anschließend gemeinsam beschichtet werden.

Zur Herstellung eines sogenannten LCF-Querschnitts werden vorzugsweise zwei Kerne verwendet, die ebenfalls in einem ersten Arbeitsschritt separat und anschließend gemeinsam beschichtet werden. Anschließend wird ein Schenkel des Profils mittels einem Thermoformverfahren unter einem Winkel von beispielsweise 90° zu dem Profilsteg ausgebogen. Der Winkel zwischen Steg und Flansch kann bei allen Querschnittsvarianten größer oder kleiner als 90° sein, um einen bündigen Anschluss des Flansches an eine gekrümmte Oberfläche des Flugzeugrumpfs zu gewährleisten. Stufenförmige Ausnehmungen der Flansche für die Befestigungsschenkel der Flugzeug-Längsversteifungen (Stringer) können bereits bei der Herstellung der Spanten vorgesehen oder, beispielsweise nach dem Einbringen der Durchsetzungen für die Flugzeug-Längsversteifungen, mittels einem Thermoformverfahren ausgebildet werden.

Gemäß einer Ausführungsform hat die Werkzeugform zumindest ein Paar diametral zueinander angeordnete nutförmige Ausnehmungen, die sich jeweils parallel zu einer Längsachse der Werkzeugform erstrecken. Die nutförmigen Ausnehmungen dienen als Auslauf für das Trennblatt einer Trennvorrichtung die zur Trennung der Faserverbundwerkstoffstruktur in zwei oder vier Profile verwendet wird. Beispielsweise kann die erstellte Faserverbundwerkstoffstruktur bei einer Werkzeugform mit etwa rechteckigem Querschnitt in zwei etwa C-förmige- oder vier L-förmige Profile getrennt werden, die als Spanten bzw. Teile eines Spants verwendbar sind. Die Trennung der Verbundwerkstoffstruktur kann vor oder nach dem Aushärten erfolgen. Erfolgt die Trennung vor dem Aushärten wird das Bauteil nach dem Trennvorgang vorzugsweise in eine Negativform, wahlweise zusätzlich mit einem Kern, beispielsweise einem Teil der dann mehrteiligen Werkzeugform, eingelegt und ausgehärtet. Bei einer Trennung nach dem Aushärten wird das ungetrennte Bauteil, ggf. eingelegt in eine Negativform, zusammen mit der Werkzeugform evakuiert und in einem Autoklaven ausgehärtet. Anschließend wird das ausgehärtete Bauteil getrennt und entformt.

Bei einem erfindungsgemäßen Verfahren zur Herstellung eines Faserverbundwerkstoffbauteils, beispielsweise eines CFK-Spants oder eines Rumpfsegments für ein Flugzeug, wird ein Verbundwerkstoff mit einem definierten Winkel auf mindestens eine Arbeitsoberfläche einer Werkzeugform oder eines Bauteils mittels zumindest einem Auftragskopf aufgebracht, dadurch gekennzeichnet, dass der Auftragskopf über mindestens einen Laufwagen entlang einer die Arbeitsoberfläche zumindest abschnittsweise umgreifenden Bewegungsbahn relativ zu der Arbeitsoberfläche verfahren wird.

Zur Einstellung des Verbundwerkstoffwinkels auf der Arbeitsoberfläche wird der Auftragskopf bei einem besonders bevorzugten Ausführungsbeispiel der Erfindung entlang einer zu der Bewegungsbahn angestellten Schwenkachse verschwenkt, insbesondere gedreht.

Die Werkzeugform oder das Bauteil und die Bewegungsbahn werden zum Aufbringen des Verbundwerkstoffs auf die Arbeitsoberfläche vorzugsweise relativ zueinander verfahren.

Vorzugsweise wird das Verbundwerkstoffband entsprechend der herzustellenden Bauteilkontur auf die Arbeitsoberfläche aufgebracht.

Zur Herstellung eines Lagenaufbaus mit einem Winkel von 0° bezüglich der Längsachse der Werkzeugform oder des Bauteils wird der Laufwagen vorzugsweise entlang der Bewegungsbahn in einen Bereich der zu beschichtenden Arbeitsoberfläche der Werkzeugform oder des Bauteils verfahren und um die Schwenkachse in eine Arbeitsstellung verschwenkt, in welcher der Verbundwerkstoff mit einem Winkel von 0° bezüglich der Längsachse der Werkzeugform oder des Bauteils auf diese aufbringbar ist, dadurch gekennzeichnet, dass die Werkzeugform oder das Bauteil relativ zu der Bewegungsbahn bewegt wird (Faserlegen). Das heißt, der Laufwagen steht still, während die Werkzeugform oder das Bauteil relativ zu der Bewegungsbahn bewegt wird.

Wie Figur 7 zu entnehmen ist, die ein bereits teilweise entformtes Faserverbundwerkstoffbauteil 2 und die zu dessen Herstellung verwendete Werkzeugform 10 zeigt, hat die Werkzeugform 10 zwei diametral zueinander angeordnete etwa U-förmige Ausnehmungen 76, 78, die in die Seitenflächen 14, 18 der Werkzeugform 10 eingebracht sind und sich jeweils parallel zu der Längsachse 48 (siehe Figur 2) der Werkzeugform 10 erstrecken. Die nutförmigen Ausnehmungen 76, 78 dienen als Auslauf für das Trennblatt einer nicht dargestellten Trennvorrichtung die zur Trennung der Faserverbundwerkstoffstruktur 2 verwendet wird. Die erstellte Faserverbundwerkstoffstruktur 2 kann bei der Werkzeugform 10 mit etwa rechteckigem Querschnitt beispielsweise in zwei C-förmige Profile 80 getrennt werden, die für CFK-Spanten eines Flugzeugs verwendbar sind. Die C-Spanten 80 weisen jeweils zwei Flansche 82, 84 auf, die über einen Steg 86 verbunden sind, dadurch gekennzeichnet, dass der Winkel zwischen dem oberen bzw. unteren Flansch und dem Steg jeweils etwa 90° beträgt. Die Steg- und Flanschhöhe sowie die Dicke des Lagenaufbaus können entlang der Längserstreckung der Spanten 80 variabel oder konstant sein. Die Trennung des Verbundwerkstoffbauteils 2 kann vor oder nach dem Aushärten erfolgen. Erfolgt die Trennung vor dem Aushärten wird das Bauteil 2 nach dem Trennvorgang vorzugsweise in eine Negativform, wahlweise zusätzlich mit einem Kern, eingelegt und ausgehärtet. Bei einer Trennung nach dem Aushärten wird das ungetrennte Bauteil, ggf. eingelegt in eine zusätzliche Negativform, zusammen mit der Werkzeugform evakuiert und in einem Autoklaven ausgehärtet. Anschließend wird das ausgehärtete Bauteil getrennt und entformt.

Figur 8 zeigt eine Einzeldarstellung eines CFK-Rumpf-Spants 88 mit einem etwa C-förmigen Querschnitt gemäß eines weiteren Ausführungsbeispiels. Der Spant 88 weist zwei Flansche 90, 92 auf, die über einen Steg 94 verbunden sind, dadurch gekennzeichnet, dass der Winkel zwischen dem oberen Flansch 90 und dem Steg 94 etwa 90° und der Winkel zwischen dem unteren Flansch 92 und dem Steg 94 etwa 110° beträgt, um einen flächigen Anschluss des Flansches 92 beispielsweise an die gekrümmte Oberfläche 96 eines Flugzeugrumpfes zu gewährleisten.

Gemäß Figur 9, die ein Ausführungsbeispiel eines Spants 98 mit einem sogenannten LCF-Querschnitt zeigt, bei dem ein Befestigungsflansch 100 auf einer einem Flansch 102 und einer Versteifungsrippe 104 gegenüberliegenden Seite angeordnet ist, kann der Spant 98 mehrere Teilprofile, wie beispielsweise ein L- und ein C-Profil 106, 108 aufweisen. Die C-Profile 106 sind beispielsweise gemäß der Beschreibung der Figur 7 herstellbar. Eine bevorzugte Werkzeugform zur Herstellung der L-förmigen Profile 108 wird im Folgenden anhand Figur 10 näher erläutert.

Die Werkzeugform 10 hat gemäß Figur 10 zwei Paar diametral zueinander angeordnete, etwa U-förmige Ausnehmungen 110, die sich parallel zu der Längsachse 48 (siehe Figur 2) der Werkzeugform 10 im Bereich der Seitenflächen 12, 14, 16, 18 erstrecken. Die nutförmigen Ausnehmungen 110 dienen wie bereits erläutert, als Auslauf für das Trennblatt einer nicht dargestellten Trennvorrichtung, die zur Trennung des Faserverbundwerkstoffbauteils 2 verwendet wird. Nach der Trennung des Bauteils 2 können die vier gekrümmten L-Profile 106 von der Werkzeugform 10 abgenommen werden.

Figur 11 zeigt ein Ausführungsbeispiel eines CFK-Rumpf-Spants 112 mit einem etwa E-förmigen Querschnitt. Der einstückig ausgebildete Spant 112 weist zwei Flansche 114, 116 auf, die mittels einem Steg 118 verbunden sind, dadurch gekennzeichnet, dass zwischen den Flanschen 114, 116 eine Versteifungsrippe 120 angeordnet ist. Die Versteifungsrippe 120 erstreckt sich parallel zu den Flanschen 114, 116, dadurch gekennzeichnet, dass der Winkel zwischen dem unteren bzw. oberen Flansch 114, 116 und dem Steg 118 sowie der Winkel zwischen der Versteifungsrippe 120 und dem Steg bei dem dargestellten Ausführungsbeispiel etwa 90° beträgt.

Gemäß Figur 12, die den CFK-Rumpf-Spant 112 aus Figur 11 mit Werkzeugform 10 zeigt, dadurch gekennzeichnet, dass lediglich eine Bauteilhälfte dargestellt ist, finden zu dessen Herstellung zwei Kerne 122, 124 Verwendung, die in einem ersten Arbeitsschritt jeweils einzeln und anschließend gemeinsam beschichtet werden. Bei dem dargestellten Ausführungsbeispiel der Erfindung hat der obere Kern 122 eine gegenüber dem unteren Kern 124 vergrößerte Querschnittsfläche, so dass der Abstand zwischen dem Flansch 116 und der Versteifungsrippe 120 gegenüber dem Abstand des Flansches 114 zu der Versteifungsrippe 120 vergrößert ist.

Zur Herstellung eines in Figur 13 dargestellten einteiligen Spants 126 mit LCF-Querschnitt werden gemäß Figur 14, die den CFK-Rumpf-Spant 126 mit Werkzeugform 10 zeigt, dadurch gekennzeichnet, dass lediglich eine Bauteilhälfte dargestellt ist, ebenfalls zwei Kerne 128, 130 verwendet, die in einem ersten Arbeitsschritt separat und anschließend gemeinsam beschichtet werden. Nach dem Trennen der Bauteilhälften wird der Schenkelabschnitt 100 des Profils 126 mittels einem Thermoformverfahren - wie durch einen Pfeil angedeutet - unter einem Winkel von beispielsweise 90° zu dem Flansch 100 ausgebogen.

Stufenförmige Ausnehmungen (nicht dargestellt) der Flansche 92, 100, 114, für Befestigungsschenkel von Flugzeug-Längsversteifungen, sogenannten Stingern, können bereits bei der Herstellung der Spanten 80, 88, 98, 112, 126 vorgesehen oder, beispielsweise nach dem Einbringen der nicht dargestellten Durchbrüche für die Stringer, mittels einem Thermoformverfahren ausgebildet werden.

Die erfindungsgemäße Vorrichtung ist nicht auf die beschriebene Ausführung mit lediglich einem Abgabe-Vorrichtung 4 beschränkt, vielmehr kann eine Vielzahl von Auftragsköpfen 4 entlang der Bewegungsbahn 22 des Trägerrings 24 verfahrbar angeordnet sein, um die Prozessgeschwindigkeit weiter zu optimieren. Die Auftragsköpfe 4 können unabhängig voneinander verfahrbar sein, dadurch gekennzeichnet, dass es vorteilhaft ist, wenn deren Steuerung basierend auf einer gemeinsamen Zeitbasis erfolgt. Beispielsweise sind zwei um einen Winkel von etwa 180° zueinander versetzt auf der Bewegungsbahn 22 verfahrbare Auftragsköpfe 4 vorgesehen. Vorteilhaft bei einer um 180° zueinander versetzten Anordnung der Auftragköpfe 4 ist die Kompensation der Andrückkräfte auf die Werkzeugform 10 bzw. das Bauteil 2. Des Weiteren ist die Erfindung nicht auf die dargestellte Ausbildung mit lediglich einem Trägerring 24 beschränkt, beispielsweise können mehrere Trägerringe 24 seriell hintereinander angeordnet sein, wobei vorgesehen sein kann, dass insbesondere Verbundwerkstoffbänder 6 mit unterschiedlichen Bandwinkeln in einem Arbeitsgang aufgebracht werden können. Die Erfindung ist ferner nicht auf gekrümmte Werkzeugformen 10 oder Bauteile 2 beschränkt.

Bei einer Werkzeugform mit einem im Wesentlichen rechteckigen Querschnitt, werden vorzugsweise alle vier Seitenflächen der Werkzeugform belegt, dadurch gekennzeichnet, dass der Auftragskopf jeweils um 90° entlang der Bewegungsbahn verfahren wird. Vorzugsweise wird der Auftragskopf entlang der Bewegungsbahn in eine 3-, 6-, 9- und 12-Uhr-Position verschwenkt. Ferner kann bei derartigen Werkzeugformen oder Bauteilen, die eine Vielzahl von Arbeitsflächen aufweisen, für jede Arbeitsfläche zumindest ein Auftragskopf vorgesehen sein, dadurch gekennzeichnet, dass die Beschichtung der Seitenflächen zeitgleich erfolgt.

Für einen Lagenaufbau mit einem Winkel von mehr als 0° bis etwa 90°, vorzugsweise von ±45°, ±60° und/oder 90° bezüglich der Längsachse der Werkzeugform oder des Bauteils wird der Auftragskopf um die Schwenkachse in eine Arbeitsstellung verschwenkt, in welcher der Verbundwerkstoff mit dem gewünschten Winkel auf die Arbeitsoberfläche aufgebracht wird, dadurch gekennzeichnet, dass die Werkzeugform oder das Bauteil relativ zu der Bewegungsbahn und der Laufwagen entlang der Bewegungsbahn bewegt wird (Faser-Wickeln). Durch Einstellung der Drehgeschwindigkeit des Laufwagens entlang der Bewegungsbahn und der Zustellgeschwindigkeit des Zustellwagens kann der Winkel unterschiedlich eingestellt werden. Beispielsweise wird der Auftragskopf für einen 90°-Bandverlauf eines Verbundwerkstoffbands in eine 90°-Stellung gedreht, ein Endabschnitt des Verbundwerkstoffbands auf die Arbeitsoberfläche aufgedrückt und der Auftragskopf mittels des Laufwagens um 360° entlang der Bewegungsbahn verfahren, dadurch gekennzeichnet, dass ein Verbundwerkstoffstreifen auf die Werkzeugform aufgebracht wird. Anschließend wird das Band getrennt und die Werkzeugform bzw. das Bauteil entlang der Zustellbahn entsprechend dem Betrag einer Bandbreite verfahren. Für eine effizientere Beschichtung wird der 90°-Winkel um eine Abweichung verkleinert oder vergrößert, die von dem Umfang der Werkzeugform bzw. des Bauteils und der Bandbreite abhängig ist. Der Winkel der folgenden Lage des Verbundwerkstoffmaterials kann entsprechend um eine Abweichung vergrößert oder verkleinert werden, so dass die Werkstoffeigenschaften ausgeglichen sind. Dies ermöglicht eine durchgängige, spiralförmige Beschichtung der Werkzeugform bzw. des Bauteils.

Bei einer alternativen Variante zur Herstellung eines Lagenaufbaus wird ein die Bewegungsbahn aufweisender Trägerring relativ zu der Werkzeugform oder dem Bauteil verfahren.

## Bezugszeichenliste

1      Vorrichtung

2      Faserverbundwerkstoffbauteil

4      Abgabe-Vorrichtung

| 6 | Verbundwerkstoffband |
| 8 | Arbeitsoberfläche |
| 10 | Werkzeugform |
| 12 | Seitenfläche |
| 14 | Seitenfläche |
| 16 | Seitenfläche |
| 18 | Seitenfläche |
| 20 | Laufwagen |
| 22 | Bewegungsbahn |
| 24 | Trägerring |
| 26 | Hochachse |
| 28 | Abschnitt |
| 30 | Gestell |
| 32 | Rollenanordnung |
| 34 | Verzahnungsabschnitt |
| 36 | Rollenpaar |
| 38 | Rollenpaar |
| 40 | Schwenkachse |
| 42 | Tangente |
| 44 | Auftragseinrichtung |
| 46 | Gehäuse |
| 48 | Längsachse |
| 50 | Endabschnitt |
| 52 | Roboterarm |
| 54 | Endabschnitt |
| 55a | erster Arm |
| 55b | zweiter Arm |
| 55c | Gelenk |
| 56 | Greifer |
| 57 | Kopplungsvorrichtung |
| 58 | Tangente |
| 60 | Zustellwagen |
| 62 | Zustellbahn |
| 64 | Greifer |
| 66 | Trägerteil |
| 68 | Rollenanordnung |
| 70 | Verzahnungsabschnitt |
| 72 | Rollenpaar |
| 74 | Rollenpaar |
| 76 | Ausnehmung |
| 78 | Ausnehmung |
| 80 | C-Profil |
| 82 | Flansch |
| 84 | Flansch |
| 86 | Steg |
| 88 | CFK-Rumpf-Spant |
| 90 | Flansch |
| 92 | Flansch |
| 94 | Steg |
| 96 | Oberfläche |
| 98 | Spant |
| 100 | Flansch |
| 102 | Flansch |
| 104 | Versteifungsrippe |
| 106 | L-Profil |
| 108 | C-Profil |
| 110 | Ausnehmung |
| 112 | Spant |

| 114 | Flansch |
| 116 | Flansch |
| 118 | Steg |
| 120 | Versteifungsrippe |
| 122 | Kern |
| 124 | Kern |
| 126 | Spant |
| 128 | Kern |
| 130 | Kern |
| 132 | Schenkelabschnitt |

## Patentansprüche

1. Vorrichtung (1) zur Herstellung eines FVW-Bauteils (2) mit zumindest einer Abgabe-Vorrichtung (4) zum Aufnehmen von bandförmigen Prepreg-Material und zum Auflegen des bandförmigen Prepreg-Materials (6) auf eine Oberfläche (8) einer Werkzeugform (10) oder eines Halbzeugs (2) zur Herstellung des FVW-Bauteils, wobei die Vorrichtung (1) eine Zustellvorrichtung zum Bewegen der Werkzeugform (10) oder des Halbzeugs (2) relativ zu der Führungsbahn (22) aufweist,
**dadurch gekennzeichnet, dass** die Vorrichtung aufweist:

   ■ eine umlaufende Führungsbahn (22),
   ■ einen Laufwagen (20), aufweisend eine Abgabe-Vorrichtung (4) mit einer RollenAnordnung, durch die der Laufwagen (20) an der umlaufenden Führungsbahn (22) gelagert und entlang der umlaufenden Führungsbahn (22) bewegbar ist, wobei die Abgabevorrichtung (4) drehbar auf dem Laufwagen (20) angelenkt ist und eine Aufnahmerolle zur Aufnahme und Abgabe des bandförmigen Prepreg-Materials (6) aufweist,

   wobei die Zustellvorrichtung zur Durchführung einer Zustellbewegung der Werkzeugform (10) oder des Halbzeugs (2) relativ zur Führungsbahn (22) eine Kopplungsvorrichtung zum Halten eines Endabschnitts (54) der Werkzeugform (10) oder des Halbzeugs (2) aufweist.

2. Vorrichtung nach dem Anspruch 1, **dadurch gekennzeichnet, dass** die Vorrichtung (1) derart eingerichtet ist, dass der Laufwagen (20) relativ zu der Oberfläche (8) und die Werkzeugform (10) bewegbar ist oder dass das Halbzeugs (2) relativ zur der Laufwagen (20) bewegbar ist.

3. Vorrichtung nach dem Anspruch 1 oder 2, **dadurch gekennzeichnet, dass** die Zustellvorrichtung einen Roboterarm (52) mit der Kopplungsvorrichtung aufweist.

4. Vorrichtung nach Patentanspruch 3, **dadurch gekennzeichnet, dass** der Roboterarm (52) außerhalb der Führungsbahn (22) des Laufwagens (20) angeordnet ist und einen Endabschnitt (54) der Werkzeugform (10) oder des Halbzeugs (2) zumindest abschnittsweise umgreift.

5. Vorrichtung nach einem der Patentansprüche 1 bis 2, **dadurch gekennzeichnet, dass** die Vorrichtung eine Zustellbahn (66) und einen auf dieser bewegbaren Zustellwagen (60) aufweist, an dem die Werkzeugform (10) oder das Halbzeug (2) gehalten werden kann.

6. Vorrichtung nach Patentanspruch 5, **dadurch gekennzeichnet, dass** die Zustellbahn (66) zumindest eine Laufschiene zur Aufnahme einer Rollenanordnung (68) des Zustellwagens (60) aufweist.

7. Vorrichtung nach einem der Patentansprüche 5 oder 6, **dadurch gekennzeichnet, dass** die Zustellbahn (66) zumindest einen Verzahnungsabschnitt (70) aufweist, der mit mindestens einem Antriebsrad des Zustellwagens (60) in Eingriff bringbar ist.

8. Vorrichtung nach einem der Patentansprüche 1 bis 7, **dadurch gekennzeichnet, dass** die Vorrichtung eine Bewegungssteuerung des Laufwagens (20) entlang der Bewegungsbahn (22) und/oder der Abgabe-Vorrichtung (4) entlang der Schwenkachse (40) und/oder der Werkzeugform (10) oder des Halbzeugs (2) und/oder der Bewegungsbahn (22) relativ zueinander aufweist.

9. Vorrichtung nach einem der Patentansprüche 1 bis 7, **dadurch gekennzeichnet, dass** die Bewegung des Laufwagens (20) entlang der Führungsbahn (22) sowie die Zustellbewegung der Werkzeugform (10) bzw. des Halbzeugs (2) und der Führungsbahn (22) durch eine Kopplungseinrichtung miteinander gekoppelt sind.

10. Vorrichtung nach einem der vorangehenden Ansprüche, **dadurch gekennzeichnet, dass** die Vorrichtung eine Bewegungssteuerung aufweist, die derart gestaltet ist, dass bei einer vorbestimmten Krümmung der Werkzeugform (10) oder des Halbzeugs (2) in Längsrichtung mit einem entlang der Längsrichtung variablen oder nicht-variablen Krümmungsradius (RK) die Richtung des Krümmungsradius (RK) auf den Mittelpunkt des Bereichs, auf den das bandförmige Material (6) von der Abgabe-Vorrichtung aus auf die Oberfläche der Werkzeugform (10) oder des Halbzeugs (2) aufgelegt wird, um maximal 30 Grad von der Radialebene (E), die von der Führungsbahn (22) aufgespannt wird, oder von der Tangentialebene an der momentanen Stelle des Wagens (20) abweicht.

11. Vorrichtung nach einem der Ansprüche 2 bis 9, **dadurch gekennzeichnet, dass** die Kopplungsvorrichtung einen Greifer aufweist, der derart gestaltet ist, dass dieser der Werkzeugform (10) oder das Halbzeug (2) an einem Ende zumindest abschnittsweise umgreifen kann.

12. Vorrichtung nach einem der vorangehenden Ansprüche, **dadurch gekennzeichnet, dass** die Abgabe-Vorrichtung (4) um eine zu der Führungsbahn (22) quer verlaufende Schwenkachse (40) schwenkbar ist.

13. Vorrichtung nach einem der vorhergehenden Patentansprüche, **dadurch gekennzeichnet, dass** die Führungsbahn (22) an einem ringförmigen Trägerteil (24) ausgebildet ist, der die Werkzeugform (10) oder das Halbzeug (2) umläuft.

14. Vorrichtung nach einem der vorhergehenden Patentansprüche, **dadurch gekennzeichnet, dass** die Führungsbahn (22) zumindest eine Laufschiene zur Aufnahme einer Rollenanordnung (32) des Laufwagens (20) aufweist.

15. Verfahren zur Herstellung eines FVW-Bauteils (2) mit zumindest einer Abgabe-Vorrichtung (4) zum Auflegen von bandförmigem Material (6) auf die Oberfläche (8) einer Werkzeugform (10) oder eines Halbzeugs (2) zur Herstellung des FVW-Bauteils, **dadurch gekennzeichnet,**
**dass** die Abgabe-Vorrichtung (4) auf einem Laufwagen (20) angeordnet entlang einer die Oberfläche (8) zumindest teilweise in deren Umfangsrichtung umlaufenden Führungsbahn (22) gefahren wird und dabei das bandförmige Material abgibt und auf die Oberfläche auflegt,
**dass** eine Zustellbewegung der Werkzeugform (10) oder des Halbzeugs (2) relativ zur Führungsbahn (22) erfolgt, wobei ein Endabschnitt (54) der Werkzeugform (10) oder des Halbzeugs (2) mittels einer Kopplungsvorrichtung gehalten wird.

## Claims

1. A device (1) for manufacturing a FC component (2) with at least one distributing device (4) for receiving band-shaped prepreg material for placing material (6) onto a surface (8) of a tool mold (10) or semi-finished product (2) to manufacture the FC component, wherein the device (1) comprises a feeder for moving the tool mold (10) or semi-finished product (2) relative to the guide way (22),
**characterized in that** the device comprises:

   ■ a circumferential guide way (22),
   ■ a bogie truck (20) comprising a distributing device (4) with a roller set, by which the bogie truck (20) is being guided by the guide way (22) and is being movable along the circumferentially extending guide way (22), wherein the distributing device (4) is rotatably articulated on the bogie truck (20) and comprises a receiving roller for receiving and dispensing the band-shaped prepreg material (6),

   wherein the feeder comprises a coupling device for holding an end section (54) of the tool mold (10) or semi-finished product (2) in order to execute a feed motion of the tool mold (10) or semi-finished product (2) relative to the guide way (22).

2. The device of claim 1, **characterized in that** the device (1) is realized such that the bogie truck (20) is movable relative to the surface (8) or the tool mold (10) or that the semi-finished product (2) is movable relative to the bogie truck (20).

3. The device of claim 1, **characterized in that** the feeder comprises a robot arm (52) with the coupling device.

4. The device of claim 3, **characterized in that** the robot arm (52) is arranged outside the guide way (22) of the bogie truck (20), and at least sectionally envelops an end section (54) of the tool mold (10) or semi-finished product (2).

5. The device of claim 1, **characterized in that** the device comprises a feed path (66) and a feed truck (60) traversable thereupon, which can hold the tool mold (10) or semi-finished product (2).

6. The device of claim 5, **characterized in that** the feed path (66) comprises at least one rail for accommodating a roller set (68) of the feed truck (60).

7. The device of claim 5, **characterized in that** the feed path (66) comprises at least one toothed section (70), which can be engaged with at least one driving wheel of the feed truck (60).

8. The device of claim 1, **characterized in that** the device comprises a motion controller for the bogie truck (20) along the path of motion (22) and/or the distributing device (4) along the swiveling axis (40) and/or the tool mold (10) or semi-finished product (2) and/or the path of motion (22) relative to each other.

9. The device of claim 1, **characterized in that** the movement of the bogie truck (20) along the guide way (22) as well as the feed motion of the tool mold (10) or semi-finished product (2) and the guide way (22) can be coupled with each other by means of a coupling device.

10. The device of claim 1, **characterized in that** the device comprises a motion controller designed in such a way that, given a predetermined curvature of the tool mold (10) or semi-finished product (2) in the longitudinal direction with a radius of curvature (RK) that is variable or non-variable along the longitudinal direction, the direction of the radius of curvature (RK) toward the midpoint of the region on which the band material (6) is being placed by the distributing device onto the surface of the tool mold (10) or semi-finished product (2) deviates by at most 30 degrees from the radial plane (E) that is mounted by the guide way (22), or by the tangential plane at the instantaneous location of the truck (20).

11. The device of claim 2, **characterized in that** the coupling device comprises a gripper designed in such a way that it can envelop the tool mold (10) or semi-finished product (2) at least sectionally at one end.

12. The device of claim 1, **characterized in that** the distributing device (4) can be pivoted around a swiveling axis (40) that runs transversely to the guide way (22).

13. The device of claim 1, **characterized in that** the guide way (22) is designed on an annular carrier part (24) that circles the tool mold (10) or semi-finished product (2).

14. The device of claim 1, **characterized in that** the guide way (22) comprises at least one rail for accommodating a roller set (32) of the bogie truck (20).

15. A method for manufacturing an FC component (2) with at least one distributing device (4) for placing band-shaped material (6) onto the surface (8) of a tool mold (10) or semi-finished product (2) for manufacturing the FC component, **characterized in that** the distributing device (4) is arranged on a bogie truck (20) and traverses along a guide way (22) that runs around the surface (8) at least partially in its circumferential direction, dispensing the band material and placing it on the surface in the process,

**in that** a feed motion of the tool mold (10) or semi-finished product (2) relative to the guide way (22) takes place, wherein an end section (54) of the tool mold (10) or semi-finished product (2) is held by means of a coupling device.

**Revendications**

1. Dispositif (1) de fabrication d'une pièce en matière composite fibreuse (2) comprenant au moins un dispositif de distribution (4) pour recevoir du matériau prépeg en bande et pour déposer le matériau prépeg en bande (6) sur une surface (8) d'un moule (10) ou d'un produit semi-fini (2) pour fabriquer la pièce en matière composite fibreuse, dans lequel le dispositif (1) présente un dispositif d'approche pour déplacer le moule (10) ou le produit semi-fini (2) par rapport à la voie de guidage (22),
**caractérisé en ce que** le dispositif présente

• une voie de guidage périphérique (22),
• un chariot de roulement (20) présentant un dispositif de distribution (4) avec un agencement de roulettes par lequel le chariot de roulement (20) est disposé sur la voie de guidage périphérique (22) et est mobile le long de la voie de guidage périphérique (22), sachant que le dispositif de distribution (4) est articulé de manière rotative sur le chariot de roulement (20) et présente un rouleau de réception pour recevoir et distribuer le matériau prépeg en bande (6),

sachant que le dispositif d'approche pour exécuter un mouvement d'approche du moule (10) ou du produit semi-fini (2) par rapport à la voie de guidage (22) présente un dispositif de couplage pour maintenir une section d'extrémité (54) du moule (10) ou du produit semi-fini (2).

2. Dispositif selon la revendication 1, **caractérisé en ce que** le dispositif (1) est ainsi conçu que le chariot de roulement (20) est mobile par rapport à la surface (8) et au moule (10) ou que le produit semi-fini (2) est mobile par rapport au chariot de roulement (20).

3. Dispositif selon la revendication 1 ou 2, **caractérisé en ce que** le dispositif d'approche présente un bras de robot (52) avec le dispositif de couplage.

4. Dispositif selon la revendication 3, **caractérisé en ce que** le bras de robot (52) est disposé en-dehors de la voie de guidage (22) du chariot de roulement (20) et entoure au moins par tronçons une section d'extrémité (54) du moule (10) ou du produit semi-fini (2).

5. Dispositif selon l'une des revendications 1 à 2, **ca-**

**ractérisé en ce que** le dispositif présente une voie d'approche (66) et un chariot d'approche (60) mobile sur celle-ci, sur lequel le moule (10) ou le produit semi-fini (2) peut être maintenu.

6. Dispositif selon la revendication 5, **caractérisé en ce que** la voie d'approche (66) présente au moins un rail de roulement pour recevoir un agencement de roulettes (68) du chariot d'approche (60).

7. Dispositif selon la revendication 5 ou 6, **caractérisé en ce que** la voie d'approche (66) présente au moins une section dentée (70) qui peut être mise en prise avec au moins une roue motrice du chariot d'approche (60).

8. Dispositif selon l'une des revendications 1 à 7, **caractérisé en ce que** le dispositif présente une commande de mouvement du chariot de roulement (20) le long de la voie de guidage (22) et/ou du dispositif de distribution (4) le long de l'axe de pivotement (40) et/ou du moule (10) ou du produit semi-fini (2) et/ou de la voie de guidage (22), l'un par rapport à l'autre.

9. Dispositif selon l'une des revendications 1 à 7, **caractérisé en ce que** le mouvement du chariot de roulement (20) le long de la voie de guidage (22) ainsi que le mouvement d'approche du moule (10) respectivement du produit semi-fini (2) et de la voie de guidage (22) sont couplés l'un à l'autre par un dispositif de couplage.

10. Dispositif selon l'une des revendications précédentes, **caractérisé en ce que** le dispositif présente une commande de mouvement qui est ainsi conçue que pour une courbure prédéterminée du moule (10) ou du produit semi-fini (2) dans le sens longitudinal avec un rayon de courbure (RK) variable ou non le long du sens longitudinal, le sens du rayon de courbure (RK) sur le point central de la zone sur laquelle le matériau en bande (6) provenant du dispositif de distribution est déposé sur la surface du moule (10) ou du produit semi-fini (2), s'écarte de 30 degrés au maximum du plan radial (E) fixé depuis la voie de guidage (22) ou du plan tangentiel sur le point momentané du chariot (20).

11. Dispositif selon l'une des revendications 2 à 9, **caractérisé en ce que** le dispositif de couplage présente un grappin qui est ainsi conçu que celui-ci peut entourer au moins par tronçons le moule (10) ou le produit semi-fini (2) sur une extrémité.

12. Dispositif selon l'une des revendications précédentes, **caractérisé en ce que** le dispositif de distribution (4) peut pivoter sur un axe de pivotement (40) transversal à la voie de guidage (22).

13. Dispositif selon l'une des revendications précédentes, **caractérisé en ce que** la voie de guidage (22) est formée sur une partie porteuse annulaire (24) qui entoure le moule (10) ou le produit semi-fini (2).

14. Dispositif selon l'une des revendications précédentes, **caractérisé en ce que** la voie de guidage (22) présente au moins un rail de roulement pour recevoir un agencement de roulettes (32) du chariot d'approche (20).

15. Procédé de fabrication d'une pièce en matière composite fibreuse (2) comprenant au moins un dispositif de distribution (4) pour déposer du matériau prépeg en bande (6) sur la surface (8) d'un moule (10) ou d'un produit semi-fini (2) pour fabriquer la pièce en matière composite fibreuse,
**caractérisé en ce que**
le dispositif de distribution (4) est disposé sur un chariot de roulement (20) le long d'un voie de guidage (22) entourant au moins partiellement la surface (8) dans son sens périphérique et distribue ainsi le matériau en bande et le dépose sur la surface, qu'un mouvement d'approche du moule (10) ou du produit semi-fini (2) a lieu par rapport à la voie de guidage (22), sachant qu'une section d'extrémité (54) du moule (10) ou du produit semi-fini (2) est maintenue par un dispositif de couplage.

Fig. 2

Fig. 3

Fig. 4

EP 2 225 092 B1

Fig. 5

Fig. 6

2

82   14   76   82

12

86

80

84   18   78   10   84

16

86

80

Fig. 7

90

94

92

96

Fig. 8

98

102

108

106

104

100

96

<u>Fig. 9</u>

2

106   14   110   106

12                      16

110                    110

106   10   110   18   106

<u>Fig. 10</u>

25

116

112

118

120

114

Fig. 11

112    116    10

118

120    114

122

124

Fig. 12

126

102

104

100

**Fig. 13**

104  102

126

10

100

128

100

130

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3843488 A1
- US 3397847 A
- WO 9104843 A
- DE 4122785 A1
- WO 2005018917 A2
- WO 2006060270 A1
- WO 2005105641 A2